# EUROPEAN PATENT APPLICATION

(11) **EP 4 440 228 A1**
(43) Date of publication of application: **02.10.2024**
(21) Application number: 23205738.0
(22) Date of filing: 25.10.2023
(51) Int. Cl.: H04W 74/06, H04W 72/512, H04W 74/00, H04W 74/0816, H04W 84/12

(54) **APPARATUS, SYSTEM, AND METHOD OF A CONTENTION-BASED TIME PERIOD ALLOCATION FOR LATENCY-SENSITIVE TRAFFIC**

(30) Priority: 29.03.2023 US 202318192446
(71) Applicant: INTEL Corporation, Santa Clara, CA 95054 (US)
(72) Inventor: DAS, Dibakar, Hillsboro (US); AKHMETOV, Dmitry, Hillsboro (US); CARIOU, Laurent, 29290 Milizac (FR)
(74) Representative: Viering, Jentschura & Partner mbB Patent- und Rechtsanwälte

(57) **Abstract**

For example, an Access Point (AP) may be configured to set an Association Identifier (AID) field to a predefined AID value. For example, the predefined AID value may be configured to indicate that a non-AP station (STA) having latency-sensitive traffic is to be allowed to transmit a non-Trigger-Based (non-TB) Physical layer (PHY) Protocol Data Unit (PPDU) including the latency-sensitive traffic according to a channel contention mechanism during a contention-based time period. For example, the AP may be configured to transmit a trigger frame to allocate the contention-based time period. For example, the trigger frame may include the AID field.

## Description

### TECHNICAL FIELD

Aspects described herein generally relate to a contention-based time period allocation for latency-sensitive traffic.

### BACKGROUND

Devices in a wireless communication system may be configured to communicate according to communication protocols, which may be configured to support communication of latency-sensitive traffic.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a system, in accordance with some demonstrative aspects.
Fig. 2 is a schematic illustration of a multi-link communication scheme, which may be implemented in accordance with some demonstrative aspects.
Fig. 3 is a schematic illustration of a multi-link communication scheme, which may be implemented in accordance with some demonstrative aspects.
Fig. 4 is a schematic illustration of an allocation of a contention-based time period for latency-sensitive traffic, in accordance with some demonstrative aspects.
Fig. 5 is a schematic illustration of a user information (info) field format, in accordance with some demonstrative aspects.
Fig. 6 is a schematic illustration of communications by a first wireless communication device and a second wireless communication device during a Target Wake Time (TWT) Service Period (SP), in accordance with some demonstrative aspects.
Fig. 7 is a schematic flow-chart illustration of a method of a contention-based time period allocation for latency-sensitive traffic, in accordance with some demonstrative aspects.
Fig. 8 is a schematic flow-chart illustration of a method of a contention-based time period allocation for latency-sensitive traffic, in accordance with some demonstrative aspects.
Fig. 9 is a schematic illustration of a product of manufacture, in accordance with some demonstrative aspects.

### DETAILED DESCRIPTION

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Some aspects may be used in conjunction with various devices and systems, for example, a User Equipment (UE), a Mobile Device (MD), a wireless station (STA), a Personal Computer (PC), a desktop computer, a mobile computer, a laptop computer, a notebook computer, a tablet computer, a server computer, a handheld computer, a handheld device, a wearable device, a sensor device, an Internet of Things (IoT) device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some aspects may be used in conjunction with devices and/or networks operating in accordance with existing IEEE 802.11 standards (including IEEE 802.11-2020 (*IEEE 802.11-2020, IEEE Standard for Information Technology-Telecommunications and Information Exchange between Systems Local and Metropolitan Area Networks-Specific Requirements; Part 11: Wireless LAN Medium Access Control (MAC) and Physical Layer (PHY) Specifications, December, 2020) ;* and/or IEEE 802.11be (*IEEE P802.11be*/*D2.0 Draft Standard for Information technology- Telecommunications and information exchange between systems Local and metropolitan area networks- Specific requirements; Part 11: Wireless LAN Medium Access Control (MAC) and Physical Layer (PHY) Specifications; Amendment 8: Enhancements for extremely high throughput (EHT), May 2022*)) and/or future versions and/or derivatives thereof, devices and/or networks operating in accordance with existing cellular specifications and/or protocols, and/or future versions and/or derivatives thereof, units and/or devices which are part of the above networks, and the like.

Some aspects may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multistandard radio devices or systems, a wired or wireless handheld device, e.g., a Smartphone, a Wireless Application Protocol (WAP) device, or the like.

Some aspects may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), FDM Time-Division Multiplexing (TDM), Time-Division Multiple Access (TDMA), Multi-User MIMO (MU-MIMO), Spatial Division Multiple Access (SDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{®}, Global Positioning System (GPS), Wi-Fi, Wi-Max, ZigBeeTM, Ultra-Wideband (UWB), 4G, Fifth Generation (5G), or Sixth Generation (6G) mobile networks, 3GPP, Long Term Evolution (LTE), LTE advanced, Enhanced Data rates for GSM Evolution (EDGE), or the like. Other aspects may be used in various other devices, systems and/or networks.

The term "wireless device", as used herein, includes, for example, a device capable of wireless communication, a communication device capable of wireless communication, a communication station capable of wireless communication, a portable or non-portable device capable of wireless communication, or the like. In some demonstrative aspects, a wireless device may be or may include a peripheral that may be integrated with a computer, or a peripheral that may be attached to a computer. In some demonstrative aspects, the term "wireless device" may optionally include a wireless service.

The term "communicating" as used herein with respect to a communication signal includes transmitting the communication signal and/or receiving the communication signal. For example, a communication unit, which is capable of communicating a communication signal, may include a transmitter to transmit the communication signal to at least one other communication unit, and/or a communication receiver to receive the communication signal from at least one other communication unit. The verb communicating may be used to refer to the action of transmitting or the action of receiving. In one example, the phrase "communicating a signal" may refer to the action of transmitting the signal by a first device, and may not necessarily include the action of receiving the signal by a second device. In another example, the phrase "communicating a signal" may refer to the action of receiving the signal by a first device, and may not necessarily include the action of transmitting the signal by a second device. The communication signal may be transmitted and/or received, for example, in the form of Radio Frequency (RF) communication signals, and/or any other type of signal.

As used herein, the term "circuitry" may refer to, be part of, or include, an Application Specific Integrated Circuit (ASIC), an integrated circuit, an electronic circuit, a processor (shared, dedicated or group), and/or memory (shared, dedicated, or group), that execute one or more software or firmware programs, a combinational logic circuit, and/or other suitable hardware components that provide the described functionality. In some aspects, some functions associated with the circuitry may be implemented by, one or more software or firmware modules. In some aspects, circuitry may include logic, at least partially operable in hardware.

The term "logic" may refer, for example, to computing logic embedded in circuitry of a computing apparatus and/or computing logic stored in a memory of a computing apparatus. For example, the logic may be accessible by a processor of the computing apparatus to execute the computing logic to perform computing functions and/or operations. In one example, logic may be embedded in various types of memory and/or firmware, e.g., silicon blocks of various chips and/or processors. Logic may be included in, and/or implemented as part of, various circuitry, e.g. radio circuitry, receiver circuitry, control circuitry, transmitter circuitry, transceiver circuitry, processor circuitry, and/or the like. In one example, logic may be embedded in volatile memory and/or non-volatile memory, including random access memory, read only memory, programmable memory, magnetic memory, flash memory, persistent memory, and the like. Logic may be executed by one or more processors using memory, e.g., registers, stuck, buffers, and/or the like, coupled to the one or more processors, e.g., as necessary to execute the logic.

Some demonstrative aspects may be used in conjunction with a WLAN, e.g., a WiFi network. Other aspects may be used in conjunction with any other suitable wireless communication network, for example, a wireless area network, a "piconet", a WPAN, a WVAN and the like.

Some demonstrative aspects may be used in conjunction with a wireless communication network communicating over a sub-10 Gigahertz (GHz) frequency band, for example, a 2.4GHz frequency band, a 5GHz frequency band, a 6GHz frequency band, and/or any other frequency band below 10GHz.

Some demonstrative aspects may be used in conjunction with a wireless communication network communicating over an Extremely High Frequency (EHF) band (also referred to as the "millimeter wave (mmWave)" frequency band), for example, a frequency band within the frequency band of between 20Ghz and 300GHz, for example, a frequency band above 45GHz, e.g., a 60GHz frequency band, and/or any other mmWave frequency band.

Some demonstrative aspects may be used in conjunction with a wireless communication network communicating over the sub-10 GHz frequency band and/or the mmWave frequency band, e.g., as described below. However, other aspects may be implemented utilizing any other suitable wireless communication frequency bands, for example, a 5G frequency band, a frequency band below 20GHz, a Sub 1 GHz (S1G) band, a WLAN frequency band, a WPAN frequency band, and the like.

Some demonstrative aspects may be implemented by an mmWave STA (mSTA), which may include for example, a STA having a radio transmitter, which is capable of operating on a channel that is within the mmWave frequency band. In one example, mmWave communications may involve one or more directional links to communicate at a rate of multiple gigabits per second, for example, at least 1 Gigabit per second, e.g., at least 7 Gigabit per second, at least 30 Gigabit per second, or any other rate.

In some demonstrative aspects, the mmWave STA may include a Directional Multi-Gigabit (DMG) STA, which may be configured to communicate over a DMG frequency band. For example, the DMG band may include a frequency band wherein the channel starting frequency is above 45 GHz.

In some demonstrative aspects, the mmWave STA may include an Enhanced DMG (EDMG) STA, which may be configured to implement one or more mechanisms, which may be configured to enable Single User (SU) and/or Multi-User (MU) communication of Downlink (DL) and/or Uplink frames (UL) using a MIMO scheme. For example, the EDMG STA may be configured to implement one or more channel bonding mechanisms, which may, for example, support communication over a channel bandwidth (BW) (also referred to as a "wide channel", an "EDMG channel", or a "bonded channel") including two or more channels, e.g., two or more 2.16 GHz channels. For example, the channel bonding mechanisms may include, for example, a mechanism and/or an operation whereby two or more channels, e.g., 2.16 GHz channels, can be combined, e.g., for a higher bandwidth of packet transmission, for example, to enable achieving higher data rates, e.g., when compared to transmissions over a single channel. Some demonstrative aspects are described herein with respect to communication over a channel BW including two or more 2.16 GHz channels, however other aspects may be implemented with respect to communications over a channel bandwidth, e.g., a "wide" channel, including or formed by any other number of two or more channels, for example, an aggregated channel including an aggregation of two or more channels. For example, the EDMG STA may be configured to implement one or more channel bonding mechanisms, which may, for example, support an increased channel bandwidth, for example, a channel BW of 4.32 GHz, a channel BW of 6.48 GHz, a channel BW of 8.64 GHz, and/or any other additional or alternative channel BW. The EDMG STA may perform other additional or alternative functionality.

In other aspects, the mmWave STA may include any other type of STA and/or may perform other additional or alternative functionality. Other aspects may be implemented by any other apparatus, device and/or station.

The term "antenna", as used herein, may include any suitable configuration, structure and/or arrangement of one or more antenna elements, components, units, assemblies and/or arrays. In some aspects, the antenna may implement transmit and receive functionalities using separate transmit and receive antenna elements. In some aspects, the antenna may implement transmit and receive functionalities using common and/or integrated transmit/receive elements. The antenna may include, for example, a phased array antenna, a single element antenna, a set of switched beam antennas, and/or the like.

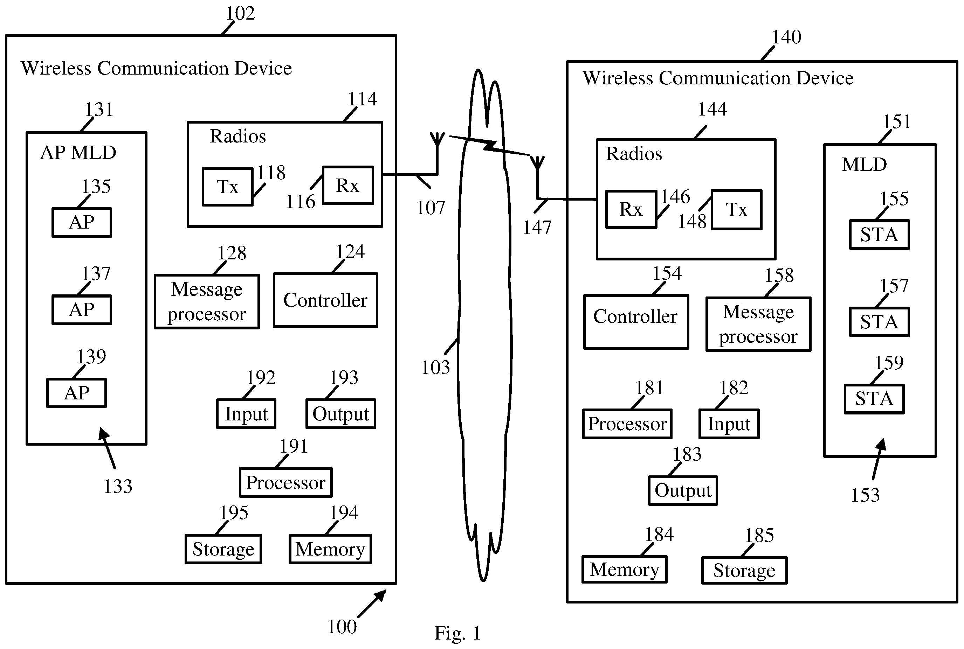

Reference is made to Fig. 1, which schematically illustrates a system 100, in accordance with some demonstrative aspects.

As shown in Fig. 1, in some demonstrative aspects, system 100 may include one or more wireless communication devices. For example, system 100 may include a wireless communication device 102, a wireless communication device 140, and/or one or more other devices.

In some demonstrative aspects, devices 102 and/or 140 may include a mobile device or a non-mobile, e.g., a static, device.

For example, devices 102 and/or 140 may include, for example, a UE, an MD, a STA, an AP, a PC, a desktop computer, a mobile computer, a laptop computer, an Ultrabook^{™} computer, a notebook computer, a tablet computer, a server computer, a handheld computer, an Internet of Things (IoT) device, a sensor device, a handheld device, a wearable device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "Carry Small Live Large" (CSLL) device, an Ultra Mobile Device (UMD), an Ultra Mobile PC (UMPC), a Mobile Internet Device (MID), an "Origami" device or computing device, a device that supports Dynamically Composable Computing (DCC), a context-aware device, a video device, an audio device, an A/V device, a Set-Top-Box (STB), a Blu-ray disc (BD) player, a BD recorder, a Digital Video Disc (DVD) player, a High Definition (HD) DVD player, a DVD recorder, a HD DVD recorder, a Personal Video Recorder (PVR), a broadcast HD receiver, a video source, an audio source, a video sink, an audio sink, a stereo tuner, a broadcast radio receiver, a flat panel display, a Personal Media Player (PMP), a digital video camera (DVC), a digital audio player, a speaker, an audio receiver, an audio amplifier, a gaming device, a data source, a data sink, a Digital Still camera (DSC), a media player, a Smartphone, a television, a music player, or the like.

In some demonstrative aspects, device 102 may include, for example, one or more of a processor 191, an input unit 192, an output unit 193, a memory unit 194, and/or a storage unit 195; and/or device 140 may include, for example, one or more of a processor 181, an input unit 182, an output unit 183, a memory unit 184, and/or a storage unit 185. Devices 102 and/or 140 may optionally include other suitable hardware components and/or software components. In some demonstrative aspects, some or all of the components of one or more of devices 102 and/or 140 may be enclosed in a common housing or packaging, and may be interconnected or operably associated using one or more wired or wireless links. In other aspects, components of one or more of devices 102 and/or 140 may be distributed among multiple or separate devices.

In some demonstrative aspects, processor 191 and/or processor 181 may include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. Processor 191 may execute instructions, for example, of an Operating System (OS) of device 102 and/or of one or more suitable applications. Processor 181 may execute instructions, for example, of an Operating System (OS) of device 140 and/or of one or more suitable applications.

In some demonstrative aspects, input unit 192 and/or input unit 182 may include, for example, a keyboard, a keypad, a mouse, a touch-screen, a touch-pad, a track-ball, a stylus, a microphone, or other suitable pointing device or input device. Output unit 193 and/or output unit 183 may include, for example, a monitor, a screen, a touch-screen, a flat panel display, a Light Emitting Diode (LED) display unit, a Liquid Crystal Display (LCD) display unit, a plasma display unit, one or more audio speakers or earphones, or other suitable output devices.

In some demonstrative aspects, memory unit 194 and/or memory unit 184 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 and/or storage unit 185 may include, for example, a hard disk drive, a disk drive, a solid-state drive (SSD), and/or other suitable removable or non-removable storage units. Memory unit 194 and/or storage unit 195, for example, may store data processed by device 102. Memory unit 184 and/or storage unit 185, for example, may store data processed by device 140.

In some demonstrative aspects, wireless communication devices 102 and/or 140 may be capable of communicating content, data, information and/or signals via a wireless medium (WM) 103. In some demonstrative aspects, wireless medium 103 may include, for example, a radio channel, an RF channel, a WiFi channel, a cellular channel, a 5G channel, an IR channel, a Bluetooth (BT) channel, a Global Navigation Satellite System (GNSS) Channel, and the like.

In some demonstrative aspects, WM 103 may include one or more wireless communication frequency bands and/or channels. For example, WM 103 may include one or more channels in a sub-10Ghz wireless communication frequency band, for example, a 2.4GHz wireless communication frequency band, one or more channels in a 5GHz wireless communication frequency band, and/or one or more channels in a 6GHz wireless communication frequency band. In another example, WM 103 may additionally or alternative include one or more channels in an mmWave wireless communication frequency band.

In other aspects, WM 103 may include any other type of channel over any other frequency band.

In some demonstrative aspects, device 102 and/or device 140 may include one or more radios including circuitry and/or logic to perform wireless communication between devices 102, 140 and/or one or more other wireless communication devices. For example, device 102 may include one or more radios 114, and/or device 140 may include one or more radios 144.

In some demonstrative aspects, radios 114 and/or 144 may include one or more wireless receivers (Rx) including circuitry and/or logic to receive wireless communication signals, RF signals, frames, blocks, transmission streams, packets, messages, data items, and/or data. For example, a radio 114 may include at least one receiver 116, and/or a radio 144 may include at least one receiver 146.

In some demonstrative aspects, radios 114 and/or 144 may include one or more wireless transmitters (Tx) including circuitry and/or logic to transmit wireless communication signals, RF signals, frames, blocks, transmission streams, packets, messages, data items, and/or data. For example, a radio 114 may include at least one transmitter 118, and/or a radio 144 may include at least one transmitter 148.

In some demonstrative aspects, radios 114 and/or 144, transmitters 118 and/or 148, and/or receivers 116 and/or 146 may include circuitry; logic; Radio Frequency (RF) elements, circuitry and/or logic; baseband elements, circuitry and/or logic; modulation elements, circuitry and/or logic; demodulation elements, circuitry and/or logic; amplifiers; analog to digital and/or digital to analog converters; filters; and/or the like. For example, radios 114 and/or 144 may include or may be implemented as part of a wireless Network Interface Card (NIC), and the like.

In some demonstrative aspects, radios 114 and/or 144 may be configured to communicate over a 2.4GHz band, a 5GHz band, a 6GHz band, and/or any other band, for example, a directional band, e.g., an mmWave band, a 5G band, an S 1G band, and/or any other band.

In some demonstrative aspects, radios 114 and/or 144 may include, or may be associated with one or more antennas.

In some demonstrative aspects, device 102 may include one or more antennas 107, and/or device 140 may include one or more antennas 147.

Antennas 107 and/or 147 may include any type of antennas suitable for transmitting and/or receiving wireless communication signals, blocks, frames, transmission streams, packets, messages and/or data. For example, antennas 107 and/or 147 may include any suitable configuration, structure and/or arrangement of one or more antenna elements, components, units, assemblies and/or arrays. In some aspects, antennas 107 and/or 147 may implement transmit and receive functionalities using separate transmit and receive antenna elements. In some aspects, antennas 107 and/or 147 may implement transmit and receive functionalities using common and/or integrated transmit/receive elements.

In some demonstrative aspects, device 102 may include a controller 124, and/or device 140 may include a controller 154. Controller 124 may be configured to perform and/or to trigger, cause, instruct and/or control device 102 to perform, one or more communications, to generate and/or communicate one or more messages and/or transmissions, and/or to perform one or more functionalities, operations and/or procedures between devices 102, 140 and/or one or more other devices; and/or controller 154 may be configured to perform, and/or to trigger, cause, instruct and/or control device 140 to perform, one or more communications, to generate and/or communicate one or more messages and/or transmissions, and/or to perform one or more functionalities, operations and/or procedures between devices 102, 140 and/or one or more other devices, e.g., as described below.

In some demonstrative aspects, controllers 124 and/or 154 may include, or may be implemented, partially or entirely, by circuitry and/or logic, e.g., one or more processors including circuitry and/or logic, memory circuitry and/or logic, Media-Access Control (MAC) circuitry and/or logic, Physical Layer (PHY) circuitry and/or logic, baseband (BB) circuitry and/or logic, a BB processor, a BB memory, Application Processor (AP) circuitry and/or logic, an AP processor, an AP memory, and/or any other circuitry and/or logic, configured to perform the functionality of controllers 124 and/or 154, respectively. Additionally or alternatively, one or more functionalities of controllers 124 and/or 154 may be implemented by logic, which may be executed by a machine and/or one or more processors, e.g., as described below.

In one example, controller 124 may include circuitry and/or logic, for example, one or more processors including circuitry and/or logic, to cause, trigger and/or control a wireless device, e.g., device 102, and/or a wireless station, e.g., a wireless STA implemented by device 102, to perform one or more operations, communications and/or functionalities, e.g., as described herein. In one example, controller 124 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In one example, controller 154 may include circuitry and/or logic, for example, one or more processors including circuitry and/or logic, to cause, trigger and/or control a wireless device, e.g., device 140, and/or a wireless station, e.g., a wireless STA implemented by device 140, to perform one or more operations, communications and/or functionalities, e.g., as described herein. In one example, controller 154 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In some demonstrative aspects, at least part of the functionality of controller 124 may be implemented as part of one or more elements of radio 114, and/or at least part of the functionality of controller 154 may be implemented as part of one or more elements of radio 144.

In other aspects, the functionality of controller 124 may be implemented as part of any other element of device 102, and/or the functionality of controller 154 may be implemented as part of any other element of device 140.

In some demonstrative aspects, device 102 may include a message processor 128 configured to generate, process and/or access one or messages communicated by device 102.

In one example, message processor 128 may be configured to generate one or more messages to be transmitted by device 102, and/or message processor 128 may be configured to access and/or to process one or more messages received by device 102, e.g., as described below.

In one example, message processor 128 may include at least one first component configured to generate a message, for example, in the form of a frame, field, information element and/or protocol data unit, for example, a MAC Protocol Data Unit (MPDU); at least one second component configured to convert the message into a PHY Protocol Data Unit (PPDU), for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 128 may be configured to perform any other additional or alternative functionality and/or may include any other additional or alternative components to generate and/or process a message to be transmitted.

In some demonstrative aspects, device 140 may include a message processor 158 configured to generate, process and/or access one or more messages communicated by device 140.

In one example, message processor 158 may be configured to generate one or more messages to be transmitted by device 140, and/or message processor 158 may be configured to access and/or to process one or more messages received by device 140, e.g., as described below.

In one example, message processor 158 may include at least one first component configured to generate a message, for example, in the form of a frame, field, information element and/or protocol data unit, for example, an MPDU; at least one second component configured to convert the message into a PPDU, for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 158 may be configured to perform any other additional or alternative functionality and/or may include any other additional or alternative components to generate and/or process a message to be transmitted.

In some demonstrative aspects, message processors 128 and/or 158 may include, or may be implemented, partially or entirely, by circuitry and/or logic, e.g., one or more processors including circuitry and/or logic, memory circuitry and/or logic, MAC circuitry and/or logic, PHY circuitry and/or logic, BB circuitry and/or logic, a BB processor, a BB memory, AP circuitry and/or logic, an AP processor, an AP memory, and/or any other circuitry and/or logic, configured to perform the functionality of message processors 128 and/or 158, respectively. Additionally or alternatively, one or more functionalities of message processors 128 and/or 158 may be implemented by logic, which may be executed by a machine and/or one or more processors, e.g., as described below.

In some demonstrative aspects, at least part of the functionality of message processor 128 may be implemented as part of radio 114, and/or at least part of the functionality of message processor 158 may be implemented as part of radio 144.

In some demonstrative aspects, at least part of the functionality of message processor 128 may be implemented as part of controller 124, and/or at least part of the functionality of message processor 158 may be implemented as part of controller 154.

In other aspects, the functionality of message processor 128 may be implemented as part of any other element of device 102, and/or the functionality of message processor 158 may be implemented as part of any other element of device 140.

In some demonstrative aspects, at least part of the functionality of controller 124 and/or message processor 128 may be implemented by an integrated circuit, for example, a chip, e.g., a System on Chip (SoC). In one example, the chip or SoC may be configured to perform one or more functionalities of one or more radios 114. For example, the chip or SoC may include one or more elements of controller 124, one or more elements of message processor 128, and/or one or more elements of one or more radios 114. In one example, controller 124, message processor 128, and one or more radios 114 may be implemented as part of the chip or SoC.

In other aspects, controller 124, message processor 128 and/or the one or more radios 114 may be implemented by one or more additional or alternative elements of device 102.

In some demonstrative aspects, at least part of the functionality of controller 154 and/or message processor 158 may be implemented by an integrated circuit, for example, a chip, e.g., a SoC. In one example, the chip or SoC may be configured to perform one or more functionalities of one or more radios 144. For example, the chip or SoC may include one or more elements of controller 154, one or more elements of message processor 158, and/or one or more elements of one or more radios 144. In one example, controller 154, message processor 158, and one or more radios 144 may be implemented as part of the chip or SoC.

In other aspects, controller 154, message processor 158 and/or one or more radios 144 may be implemented by one or more additional or alternative elements of device 140.

In some demonstrative aspects, device 102 and/or device 140 may include, operate as, perform the role of, and/or perform one or more functionalities of, one or more STAs. For example, device 102 may include at least one STA and/or device 140 may include at least one STA.

In some demonstrative aspects, device 102 and/or device 140 may include, operate as, perform the role of, and/or perform one or more functionalities of, one or more Extremely High Throughput (EHT) STAs. For example, device 102 may include, operate as, perform the role of, and/or perform one or more functionalities of, one or more EHT STAs, and/or device 140 may include, operate as, perform the role of, and/or perform one or more functionalities of, one or more EHT STAs.

In some demonstrative aspects, for example, device 102 and/or device 140 may be configured to perform one or more operations, and/or functionalities of a WiFi 8 STA.

In other aspects, for example, devices 102 and/or 140 may be configured to perform one or more operations, and/or functionalities of an Ultra High Reliability (UHR) STA.

In other aspects, for example, devices 102 and/or 140 may be configured to perform one or more operations, and/or functionalities of any other additional or alternative type of STA.

In other aspects, device 102 and/or device 140 may include, operate as, perform the role of, and/or perform one or more functionalities of, any other wireless device and/or station, e.g., a WLAN STA, a WiFi STA, and the like.

In some demonstrative aspects, device 102 and/or device 140 may be configured operate as, perform the role of, and/or perform one or more functionalities of, an access point (AP), e.g., an EHT AP STA.

In some demonstrative aspects, device 102 and/or device 140 may be configured to operate as, perform the role of, and/or perform one or more functionalities of, a non-AP STA, e.g., an EHT non-AP STA.

In other aspects, device 102 and/or device 140 may operate as, perform the role of, and/or perform one or more functionalities of, any other additional or alternative device and/or station.

In one example, a station (STA) may include a logical entity that is a singly addressable instance of a medium access control (MAC) and physical layer (PHY) interface to the wireless medium (WM). The STA may perform any other additional or alternative functionality.

In one example, an AP may include an entity that contains one station (STA) and provides access to the distribution services, via the wireless medium (WM) for associated STAs. An AP may include a STA and a distribution system access function (DSAF).The AP may perform any other additional or alternative functionality.

In some demonstrative aspects devices 102 and/or 140 may be configured to communicate in an EHT network, and/or any other network.

In some demonstrative aspects, devices 102 and/or 140 may be configured to operate in accordance with one or more Specifications, for example, including one or more *IEEE 802.11 Specifications,* e.g., an *IEEE 802. 11-2020 Specification,* an *IEEE 802.11be Specification,* and/or any other specification and/or protocol.

In some demonstrative aspects, device 102 and/or device 140 may include, operate as, perform a role of, and/or perform the functionality of, one or more multi-link logical entities, e.g., as described below.

In other aspect, device 102 and/or device 140 may include, operate as, perform a role of, and/or perform the functionality of, any other entities, e.g., which are not multi-link logical entities.

For example, a multi-link logical entity may include a logical entity that contains one or more STAs. The logical entity may have one MAC data service interface and primitives to the logical link control (LLC) and a single address associated with the interface, which can be used to communicate on a distribution system medium (DSM). For example, the DSM may include a medium or set of media used by a distribution system (DS) for communications between APs, mesh gates, and the portal of an extended service set (ESS). For example, the DS may include a system used to interconnect a set of basic service sets (BSSs) and integrated local area networks (LANs) to create an extended service set (ESS). In one example, a multi-link logical entity may allow STAs within the multi-link logical entity to have the same MAC address. The multi-link entity may perform any other additional or alternative functionality.

In some demonstrative aspects, device 102 and/or device 140 may include, operate as, perform a role of, and/or perform the functionality of, a Multi-Link Device (MLD). For example, device 102 may include, operate as, perform a role of, and/or perform the functionality of, at least one MLD, and/or device 140 may include, operate as, perform a role of, and/or perform the functionality of, at least one MLD, e.g., as described below.

For example, an MLD may include a device that is a logical entity and has more than one affiliated STA and has a single MAC service access point (SAP) to LLC, which includes one MAC data service. The MLD may perform any other additional or alternative functionality.

In some demonstrative aspects, for example, an infrastructure framework may include a multi-link AP logical entity, which includes APs, e.g., on one side, and a multi-link non-AP logical entity, which includes non-APs, e.g., on the other side.

In some demonstrative aspects, device 102 and/or device 140 may be configured to operate as, perform the role of, and/or perform one or more functionalities of, an AP MLD.

In some demonstrative aspects, device 102 and/or device 140 may be configured to operate as, perform the role of, and/or perform one or more functionalities of, a non-AP MLD.

In other aspects, device 102 and/or device 140 may operate as, perform the role of, and/or perform one or more functionalities of, any other additional or alternative device and/or station.

For example, an AP MLD may include an MLD, where each STA affiliated with the MLD is an AP. In one example, the AP MLD may include a multi-link logical entity, where each STA within the multi-link logical entity is an EHT AP. The AP MLD may perform any other additional or alternative functionality.

For example, a non-AP MLD may include an MLD, where each STA affiliated with the MLD is a non-AP STA. In one example, the non-AP MLD may include a multi-link logical entity, where each STA within the multi-link logical entity is a non-AP EHT STA. The non-AP MLD may perform any other additional or alternative functionality.

In one example, a multi-link infrastructure framework may be configured as an extension from a one link operation between two STAs, e.g., an AP and a non-AP STA.

In some demonstrative aspects, controller 124 may be configured to cause, trigger, instruct and/or control device 102 to operate as, perform a role of, and/or perform one or more operations and/or functionalities of, an AP MLD 131 including a plurality of AP STAs 133, e.g., including an AP STA 135, an AP STA 137 and/or an AP STA 139. In some aspects, as shown in Fig. 1, AP MLD 131 may include three AP STAs. In other aspects, AP MLD 131 may include any other number of AP STAs.

In one example, AP STA 135, AP STA 137 and/or AP STA 139 may operate as, perform a role of, and/or perform one or more operations and/or functionalities of, an EHT AP STA. In other aspects, AP STA 135, AP STA 137 and/or AP STA 139 may perform any other additional or alternative functionality.

In some demonstrative aspects, for example, the one or more radios 114 may include, for example, a radio for communication by AP STA 135 over a first wireless communication frequency channel and/or frequency band, e.g., a 2.4GHz band, as described below.

In some demonstrative aspects, for example, the one or more radios 114 may include, for example, a radio for communication by AP STA 137 over a second wireless communication frequency channel and/or frequency band, e.g., a 5GHz band, as described below.

In some demonstrative aspects, for example, the one or more radios 114 may include, for example, a radio for communication by AP STA 139 over a third wireless communication frequency channel and/or frequency band, e.g., a 6GHz band, as described below.

In some demonstrative aspects, the radios 114 utilized by APs 133 may be implemented as separate radios. In other aspects, the radios 114 utilized by APs 133 may be implemented by one or more shared and/or common radios and/or radio components.

In other aspects, controller 124 may be configured to cause, trigger, instruct and/or control device 102 to operate as, perform a role of, and/or perform one or more operations and/or functionalities of, any other additional or alternative entity and/or STA, e.g., a single STA, multiple STAs, and/or a non-MLD entity.

In some demonstrative aspects, controller 154 may be configured to cause, trigger, instruct and/or control device 140 to operate as, perform a role of, and/or perform one or more operations and/or functionalities of, an MLD 151 including a plurality of STAs 153, e.g., including a STA 155, a STA 157 and/or a STA 159. In some aspects, as shown in Fig. 1, MLD 151 may include three STAs. In other aspects, MLD 151 may include any other number of STAs.

In one example, STA 155, STA 157 and/or STA 159 may operate as, perform a role of, and/or perform one or more operations and/or functionalities of, an EHT STA. In other aspects, STA 155, STA 157 and/or STA 159 may perform any other additional or alternative functionality.

In some demonstrative aspects, for example, the one or more radios 144 may include, for example, a radio for communication by STA 155 over a first wireless communication frequency channel and/or frequency band, e.g., a 2.4GHz band, as described below.

In some demonstrative aspects, for example, the one or more radios 144 may include, for example, a radio for communication by STA 157 over a second wireless communication frequency channel and/or frequency band, e.g., a 5GHz band, as described below.

In some demonstrative aspects, for example, the one or more radios 144 may include, for example, a radio for communication by STA 159 over a third wireless communication frequency channel and/or frequency band, e.g., a 6GHz band, as described below.

In some demonstrative aspects, the radios 144 utilized by STAs 153 may be implemented as separate radios. In other aspects, the radios 144 utilized by STAs 153 may be implemented by one or more shared and/or common radios and/or radio components.

In some demonstrative aspects, controller 154 may be configured to cause, trigger, instruct and/or control MLD 151 to operate as, perform a role of, and/or perform one or more operations and/or functionalities of, a non-AP MLD. For example, STA 155, STA 157 and/or STA 159 may operate as, perform a role of, and/or perform one or more operations and/or functionalities of, a non-AP EHT STA.

In some demonstrative aspects, controller 154 may be configured to cause, trigger, instruct and/or control MLD 151 to operate as, perform a role of, and/or perform one or more operations and/or functionalities of, an AP MLD. For example, STA 155, STA 157 and/or STA 159 may operate as, perform a role of, and/or perform one or more operations and/or functionalities of, an AP EHT STA.

In other aspects controller 154 may be configured to cause, trigger, instruct and/or control device 140 to operate as, perform a role of, and/or perform one or more operations and/or functionalities of, any other additional or alternative entity and/or STA, e.g., a single STA, multiple STAs, and/or a non-MLD entity.

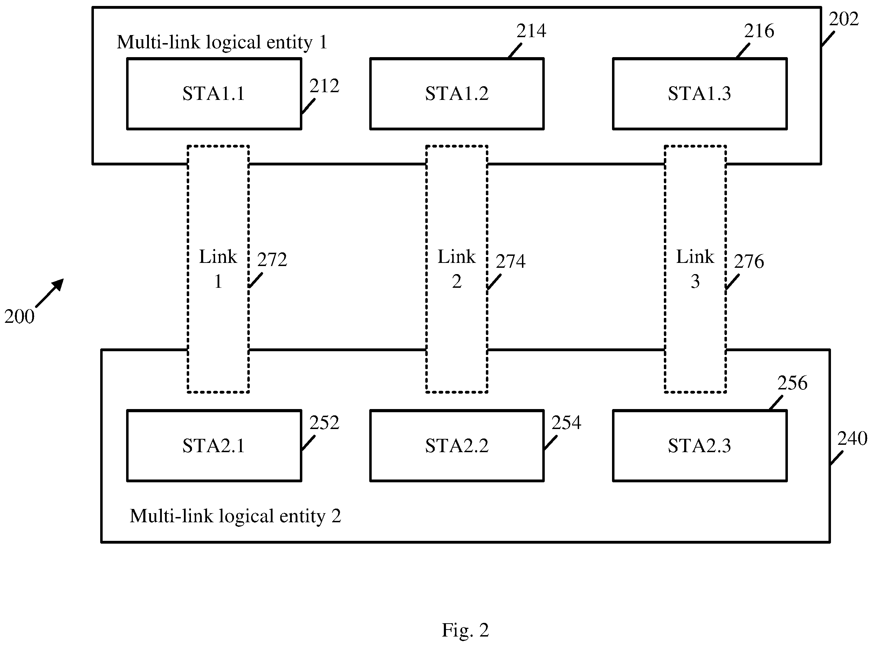

Reference is made to Fig. 2, which schematically illustrates a multi-link communication scheme 200, which may be implemented in accordance with some demonstrative aspects.

As shown in Fig. 2, a first multi-link logical entity 202 ("multi-link logical entity 1"), e.g., a first MLD, may include a plurality of STAs, e.g., including a STA 212, a STA 214, and a STA 216. In one example, AP MLD 131 (Fig. 1) may perform one or more operations, one or more functionalities, the role of, and/or the functionality of, multi-link logical entity 202.

As shown in Fig. 2, a second multi-link logical entity 240 ("multi-link logical entity 2"), e.g., a second MLD, may include a plurality of STAs, e.g., including a STA 252, a STA 254, and a STA 256. In one example, MLD 151 (Fig. 1) may perform one or more operations, one or more functionalities, the role of, and/or the functionality of, multi-link logical entity 240.

As shown in Fig. 2, multi-link logical entity 202 and multi-link logical entity 240 may be configured to form, setup and/or communicate over a plurality of links, for example, including a link 272 between STA 212 and STA 252, a link 274 between STA 214 and STA 254, and/or a link 276 between STA 216 and STA 256.

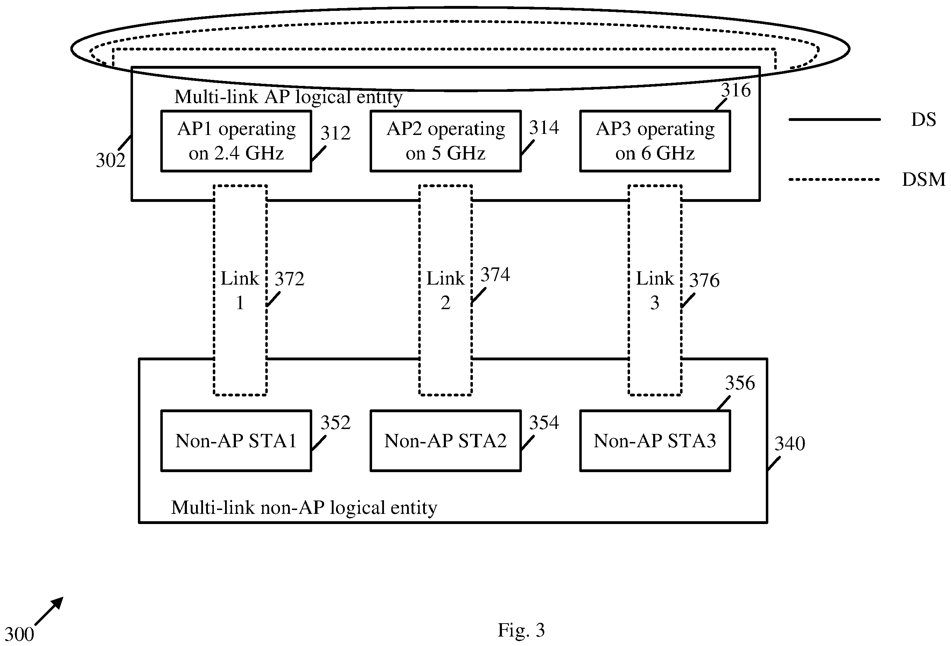

Reference is made to Fig. 3, which schematically illustrates a multi-link communication scheme 300, which may be implemented in accordance with some demonstrative aspects.

As shown in Fig. 3, a multi-link AP logical entity 302, e.g., an AP MLD, may include a plurality of AP STAs, e.g., including an AP STA 312, an AP STA 314, and an AP STA 316. In one example, AP MLD 131 (Fig. 1) may perform one or more operations, one or more functionalities, the role of, and/or the functionality of, multi-link AP logical entity 302.

As shown in Fig. 3, a multi-link non-AP logical entity 340, e.g., a non-AP MLD, may include a plurality of non-AP STAs, e.g., including a non-AP STA 352, a non-AP STA 354, and a non-AP STA 356. In one example, MLD 151 (Fig. 1) may perform one or more operations, one or more functionalities, the role of, and/or the functionality of, multi-link non-AP logical entity 340.

As shown in Fig. 3, multi-link AP logical entity 302 and multi-link non-AP logical entity 340 may be configured to form, setup and/or communicate over a plurality of links, for example, including a link 372 between AP STA 312 and non-AP STA 352, a link 374 between AP STA 314 and non-AP STA 354, and/or a link 376 between AP STA 316 and non-AP STA 356.

For example, as shown in Fig. 3, multi-link AP logical entity 302 may include a multi-band AP MLD, which may be configured to communicate over a plurality of wireless communication frequency bands. For example, as shown in Fig. 3, AP STA 312 may be configured to communicate over a 2.4GHz frequency band, AP STA 314 may be configured to communicate over a 5GHz frequency band, and/or AP STA 316 may be configured to communicate over a 6GHz frequency band. In other aspects, AP STA 312, AP STA 314, and/or AP STA 316, may be configured to communicate over any other additional or alternative wireless communication frequency bands.

Referring back to Fig. 1, in some demonstrative aspects, devices 102 and/or 140 may be configured to communicate according to one or more scheduling techniques, which may be configured to provide a technical solution to support improved scheduling of communications, e.g., as described below.

In some demonstrative aspects, the one or more scheduling techniques may include one or more scheduling techniques, e.g., in accordance with the *IEEE 802.11ax* and/or *IEEE 802.11be Specifications,* configured to achieve QoS requirements for different traffic flows, for example, low latency flows, e.g., as described below.

In some demonstrative aspects, the scheduling techniques may include a triggered operation technique.

For example, according to the triggered operation technique, an AP may allocate time-frequency resources within its obtained Transmit Opportunity (TxOP) to a specific set of STAs, e.g., for UL transmission.

In some demonstrative aspects, the scheduling techniques may include a Stream Classification Service (SCS) technique.

For example, according to the SCS technique, a STA may specify its QoS requirements to an AP, e.g., through a management frame, for example, an SCS Request frame, which may contain traffic characteristics, e.g., as part of a QoS characteristics element.

In some demonstrative aspects, the scheduling techniques may include a Target Wake Time (TWT) technique.

For example, according to the TWT technique, a service period may be negotiated between a STA and an AP, e.g., for data frame exchange.

In some demonstrative aspects, the scheduling techniques may include a restricted TWT (r-TWT) technique.

For example, the r-TWT technique may include a form of a TWT, e.g., a special form of a TWT, which may be configured to allow STAs following r-TWT rules to stop their transmission prior to a start of an r-TWT Service Period (SP), for example, thereby giving higher channel access opportunity to an AP.

In some demonstrative aspects, one or more of these scheduling techniques may be implemented to provide a technical solution to serve deterministic traffic.

In some demonstrative aspects, for example, in some implementations, scenarios, use cases, and/or deployments, there may be a need for a scheduling technique, which may be configured to provide a technical solution to support scheduling for non-deterministic traffic, e.g., in addition to or instead of the deterministic traffic.

For example, there may be a need for a scheduling technique to support scheduling for non-deterministic traffic, for example, in case of variability in traffics arriving at deterministic time, e.g., due to application and/or network jitter.

For example, an AP may schedule a TWT SP to a group of STAs, e.g., *N* STAs, at a particular periodicity, e.g., every *T* milliseconds (ms), for example, to serve UL traffic and/or P2P traffic, which may be generated, e.g., roughly every *T* ms, or with delay bound of about Tms. According to this example, there is a possibility that the AP may be unable to serve the STAs within the scheduled SPs, for example, in case packet arrivals and/or channel access within the scheduled SPs lack precision..

In one example, the AP may allocate SPs to the STAs every T/2 ms, e.g., such that a first SP and a second SP are allocated within the same time period of *T* ms. For example, the AP may implement a sampling mechanism, e.g., a polling mechanism, to efficiently allocate resources to the STAs. However, this solution may have a relatively high overhead, for example, in case the number of STAs that need to be served in the second SP is relatively small.

In some demonstrative aspects, devices 102 and/or 140 may implement one or more operations of a scheduling technique, which may be configured to provide a technical solution to support serving traffic with jitter, for example, in an efficient manner, e.g., as described below.

In some demonstrative aspects, devices 102 and/or 140 may implement one or more operations of the scheduling technique, for example, according to a mode ("mode 3") of a TxOP sharing technique, e.g., as described below.

In some demonstrative aspects, the mode 3 of the TxOP sharing technique may be configured to allow an AP to allocate time to one or more STAs, for example, using a trigger frame (TF). For example, the allocated time may be configured, for example, such that the allocated STAs may transmit during the allocated time according to a channel contention mechanism. For example, the allocated STAs may perform Enhanced Distributed Channel Access (EDCA) within the allocation. For example, this type of triggering may be implemented to provide a technical solution to solicit UL and/or P2P traffic, e.g., efficiently, for example, using the EDCA, for example, as long as number of allocated STAs is small. In one example, the allocated time may be configured such that different allocated STAs may be staggered using a time offset, e.g., as described below.

In some demonstrative aspects, controller 124 may be configured to control, trigger, cause, and/or instruct an AP implemented by device 102 to set an Association Identifier (AID) field to a predefined AID value, e.g., as described below.

In some demonstrative aspects, the predefined AID value may be configured to indicate that a non-AP STA having latency-sensitive traffic is to be allowed to transmit a non-Trigger-Based (non-TB) PPDU including the latency-sensitive traffic according to a channel contention mechanism during a contention-based time period, e.g., as described below.

In some demonstrative aspects, controller 124 may be configured to control, trigger, cause, and/or instruct the AP implemented by device 102 to transmit a trigger frame including the AID field to allocate the contention-based time period, e.g., as described below.

In some demonstrative aspects, the predefined AID value may be 2047. In other aspects, the predefined AID value may include any other alternative value, e.g., different from 2047, which may be defined to indicate that that a non-AP STA having latency-sensitive traffic is to be allowed to transmit a non-TB PPDU including the latency-sensitive traffic according to a channel contention mechanism during a contention-based time period.

In some demonstrative aspects, the non-TB PPDU may include an UL transmission of latency-sensitive traffic from a non-AP STA to the AP implemented by device 102, e.g., as described below.

In some demonstrative aspects, the non-TB PPDU may include a P2P transmission of latency-sensitive traffic from a non-AP STA to the AP implemented by device 102, or to another non-AP STA, e.g., as described below.

In other aspects, the non-TB PPDU may include any other type of transmission from the non-AP STA.

In some demonstrative aspects, controller 154 may be configured to control, trigger, cause, and/or instruct a non-AP STA implemented by device 140 to process a trigger frame received from an AP, e.g., as described below.

In some demonstrative aspects, the received trigger frame may be configured to allocate a contention-based time period, e.g., as described below.

In some demonstrative aspects, the received trigger frame may include the trigger frame transmitted by the AP implemented by device 102.

In some demonstrative aspects, controller 154 may be configured to control, trigger, cause, and/or instruct the non-AP STA implemented by device 140 to process an AID field in the received trigger frame, e.g., as described below.

In some demonstrative aspects, controller 154 may be configured to control, trigger, cause, and/or instruct the non-AP STA implemented by device 140 to determine that the non-AP STA is to be allowed to transmit a non-TB PPDU including latency-sensitive traffic according to a channel contention mechanism during the contention-based time period, for example, based on a determination that the AID field includes a predefined AID value, e.g., as described below.

In some demonstrative aspects, controller 154 may be configured to control, trigger, cause, and/or instruct the non-AP STA implemented by device 140 to transmit the non-TB PPDU including the latency-sensitive traffic, for example, according to the channel contention mechanism during the contention-based time period, e.g., as described below.

In some demonstrative aspects, the trigger frame from the AP allocating the contention-based time period, may include a Multi-user (MU) Request to Send (RTS) trigger frame, e.g., as described below.

In some demonstrative aspects, controller 124 may be configured to control, trigger, cause, and/or instruct the AP implemented by device 102 to set a predefined TxOP sharing mode subfield value in a TxOP sharing mode subfield of the MU RTS trigger frame, e.g., as described below.

In some demonstrative aspects, the predefined TxOP sharing mode subfield value may be configured to indicate that the MU RTS trigger frame is to allocate time for low-latency frame transmissions, e.g., as described below.

In some demonstrative aspects, the predefined TxOP sharing mode subfield value may be 3, e.g., to indicate that the MU RTS trigger frame is to allocate time for low-latency frame transmissions. In other aspects, any other predefined TxOP sharing mode subfield value may be defined to indicate that the MU RTS trigger frame is to allocate time for low-latency frame transmissions.

In some demonstrative aspects, controller 154 may be configured to control, trigger, cause, and/or instruct a non-AP STA implemented by device 140 to identify the predefined TxOP sharing mode subfield value, e.g., the value 3, in the TxOP sharing mode subfield of the MU RTS trigger frame. For example, controller 154 may be configured to control, trigger, cause, and/or instruct a non-AP STA implemented by device 140 to determine based on the predefined TxOP sharing mode subfield value that the MU RTS trigger frame is to allocate time for low-latency frame transmissions.

In some demonstrative aspects, controller 124 may be configured to control, trigger, cause, and/or instruct the AP implemented by device 102 to set the AID field including the predefined AID value in a user Information (info) field of the MU RTS trigger frame, e.g., as described below.

In some demonstrative aspects, controller 154 may be configured to control, trigger, cause, and/or instruct a non-AP STA implemented by device 140 to identify the AID field including the predefined AID value in the user info field of the MU RTS trigger frame.

In some demonstrative aspects, controller 124 may be configured to control, trigger, cause, and/or instruct the AP implemented by device 102 to set a PPDU duration limit subfield in the user info field, for example, to indicate a limit on a PPDU duration to be applied for the contention-based time period, e.g., as described below.

In some demonstrative aspects, controller 124 may be configured to control, trigger, cause, and/or instruct the AP implemented by device 102 to set a contention parameter subfield in the user info field, for example, to indicate one or more contention parameters to be applied for the contention-based time period, e.g., as described below.

In some demonstrative aspects, controller 124 may be configured to control, trigger, cause, and/or instruct the AP implemented by device 102 to set a non-TB PPDU transmission type subfield in the user info field, for example, to indicate a non-TB PPDU transmission type to be applied for the contention-based time period, e.g., as described below.

In some demonstrative aspects, controller 124 may be configured to control, trigger, cause, and/or instruct the AP implemented by device 102 to set a low-latency criteria subfield in the user info field, for example, to indicate low-latency criteria to be applied for the contention-based time period, e.g., as described below.

In other aspects, controller 124 may be configured to control, trigger, cause, and/or instruct the AP implemented by device 102 to set any other additional or alternative subfields in the user info field, for example, to indicate one or more additional or alternative parameters and/or criteria to be applied for the contention-based time period.

In some demonstrative aspects, controller 154 may be configured to control, trigger, cause, and/or instruct a non-AP STA implemented by device 140 to identify the PPDU duration limit subfield, the contention parameter subfield, the non-TB PPDU transmission type subfield, and/or a low-latency criteria subfield in the user info field.

In some demonstrative aspects, the trigger frame may include a Single-User (SU) trigger frame, e.g., as described below. For example, the SU trigger frame may be an "SU" trigger, in the sense that it may be configured to allocate time for communication of non-TB PPDUs.

In some demonstrative aspects, the trigger frame may include any other additional or alternative type of frame.

In some demonstrative aspects, controller 154 may be configured to control, trigger, cause, and/or instruct a non-AP STA implemented by device 140 to process a trigger frame received from an AP, e.g., as described below.

In some demonstrative aspects, the received trigger frame may be configured to allocate a contention-based time period, e.g., as described below.

In some demonstrative aspects, the received trigger frame may include the trigger frame transmitted by the AP implemented by device 102.

In some demonstrative aspects, controller 154 may be configured to control, trigger, cause, and/or instruct the non-AP STA implemented by device 140 to process an AID field in the received trigger frame, e.g., as described below.

In some demonstrative aspects, controller 154 may be configured to control, trigger, cause, and/or instruct the non-AP STA implemented by device 140 to determine that the non-AP STA is to be allowed to transmit a non-TB PPDU including latency-sensitive traffic according to a channel contention mechanism during the contention-based time period, for example, based on a determination that the AID field includes a predefined AID value, e.g., as described below.

In some demonstrative aspects, controller 154 may be configured to control, trigger, cause, and/or instruct the non-AP STA implemented by device 140 to transmit the non-TB PPDU including the latency-sensitive traffic, for example, according to the channel contention mechanism during the contention-based time period, e.g., as described below.

In some demonstrative aspects, the predefined AID value in the AID field of the trigger frame may be configured to indicate that one or more non-AP STAs having latency-sensitive traffic are to be allowed to transmit during the contention-based time period, e.g., as described below.

In some demonstrative aspects, the predefined AID value may be configured to indicate that one or more first non-AP STAs having latency-sensitive traffic are to be allowed to transmit during the contention-based time period, for example, according to a first EDCA parameter set, e.g., as described below.

In some demonstrative aspects, the predefined AID value may be configured to indicate that one or more second non-AP STAs are to be allowed to transmit during the contention-based time period, for example, according to a second EDCA parameter set, e.g., as described below.

In some demonstrative aspects, the first EDCA parameter set may be configured to provide prioritized channel access relative to the second EDCA parameter set, e.g., as described below.

In some demonstrative aspects, controller 124 may be configured to control, trigger, cause, and/or instruct the AP implemented by device 102 to configure the trigger frame to include time-offset information configured to indicate time-offsets between a plurality of contention-based time periods to be allocated by the trigger frame, e.g., as described below.

In some demonstrative aspects, controller 154 may be configured to control, trigger, cause, and/or instruct the non-AP STA implemented by device 140 to determine time-offsets between a plurality of contention-based time periods to be allocated by the trigger frame, for example, based on the time-offset information in the trigger frame, e.g., as described below.

In some demonstrative aspects, controller 124 may be configured to control, trigger, cause, and/or instruct the AP implemented by device 102 to transmit the trigger frame during a TxOP of the AP, e.g., as described below.

In some demonstrative aspects, the trigger frame may be configured to allocate the contention-based time period during the TxOP of the AP.

In some demonstrative aspects, controller 154 may be configured to control, trigger, cause, and/or instruct the non-AP STA implemented by device 140 to identify that the trigger frame is to allocate the contention-based time period during the TxOP of the AP, for example, based on receipt of the trigger frame during the TxOP of the AP, e.g., as described below.

In some demonstrative aspects, controller 124 may be configured to control, trigger, cause, and/or instruct the AP implemented by device 102 to transmit the trigger frame during an r-TWT SP, e.g., as described below.

In some demonstrative aspects, the predefined AID value in the AID field of the trigger frame may be configured to indicate that non-AP STAs, e.g., all non-AP STA, which are members of the r-TWT SP, are to be allowed to transmit non-TB PPDUs during the contention-based time period, e.g., as described below.

In some demonstrative aspects, controller 154 may be configured to control, trigger, cause, and/or instruct the non-AP STA implemented by device 140 to identify, for example, based on receipt of the trigger frame during the r-TWT SP, that the predefined AID value is to indicate that non-AP STAs, e.g., all non-AP STAs, which are members of the r-TWT SP, are to be allowed to transmit non-TB PPDUs during the contention-based time period, e.g., as described below.

In some demonstrative aspects, controller 124 may be configured to control, trigger, cause, and/or instruct the AP implemented by device 102 to transmit STA-identification information, which may be configured to identify a plurality of allocated non-AP STAs, which are to be allowed to transmit non-TB PPDUs with latency-sensitive traffic, for example, according to the channel contention mechanism during the contention-based time period, e.g., as described below.

In some demonstrative aspects, controller 154 may be configured to control, trigger, cause, and/or instruct the non-AP STA implemented by device 140 to determine, for example, based on the STA-identification information from the AP, whether the non-AP STA is included in the plurality of allocated non-AP STAs, which are to be allowed to transmit non-TB PPDUs with latency-sensitive traffic, for example, according to the channel contention mechanism during the contention-based time period, e.g., as described below.

In some demonstrative aspects, the STA-identification information may include a bitmap, which may be configured to identify the plurality of allocated STAs, e.g., as described below.

In some demonstrative aspects, a bit in the bitmap may be configured to indicate whether a particular non-AP STA corresponding to a bit location of the bit is to be included in the plurality of allocated non-AP STAs, e.g., as described below.

In some demonstrative aspects, controller 154 may be configured to control, trigger, cause, and/or instruct the non-AP STA implemented by device 140 to determine whether the non-AP STA is included in the plurality of allocated non-AP STAs, for example, based on a value of a bit in a bitmap in the STA-identification information at a bit location corresponding to the non-AP STA, e.g., as described below.

In some demonstrative aspects, controller 124 may be configured to control, trigger, cause, and/or instruct the AP implemented by device 102 to transmit the STA-identification information as part of the trigger frame, e.g., as described below.

In other aspects, controller 124 may be configured to control, trigger, cause, and/or instruct the AP implemented by device 102 to transmit the STA-identification information prior to the trigger frame.

In some demonstrative aspects, controller 154 may be configured to control, trigger, cause, and/or instruct the non-AP STA implemented by device 140 to identify the STA-identification information as part of the trigger frame.

In other aspects, controller 154 may be configured to control, trigger, cause, and/or instruct the non-AP STA implemented by device 140 to identify the STA-identification information in a transmission received from the AP prior to the trigger frame.

In other aspects, the STA-identification information may be transmitted by the AP as part of any other suitable transmission at any other suitable timing.

In some demonstrative aspects, controller 124 may be configured to control, trigger, cause, and/or instruct the AP implemented by device 102 to transmit transmission-configuration information, which may be configured to indicate a transmission-configuration of the non-TB PPDU to be transmitted during the contention-based time period, e.g., as described below.

In some demonstrative aspects, the transmission-configuration information may be configured to indicate a PPDU duration limit to be applied with respect to the transmission of the non-TB PPDU during the contention-based time period, e.g., as described below.

In some demonstrative aspects, the transmission-configuration information may be configured to indicate a TxOP limit to be applied with respect to the transmission of the non-TB PPDU during the contention-based time period, e.g., as described below.

In some demonstrative aspects, the transmission-configuration information may be configured to indicate transmission type of the non-TB PPDU to be transmitted during the contention-based time period, e.g., as described below.

In other aspects, the transmission-configuration information may be configured to indicate any other additional or alternative information to indicate any other additional or alternative transmission-configuration of the non-TB PPDU to be transmitted during the contention-based time period.

In some demonstrative aspects, controller 124 may be configured to control, trigger, cause, and/or instruct the AP implemented by device 102 to transmit the transmission-configuration information as part of the trigger frame, e.g., as described below.

In other aspects, controller 124 may be configured to control, trigger, cause, and/or instruct the AP implemented by device 102 to transmit the transmission-configuration information prior to the trigger frame.

In some demonstrative aspects, controller 154 may be configured to control, trigger, cause, and/or instruct the non-AP STA implemented by device 140 to determine a transmission-configuration, for example, based on the transmission-configuration information from the AP, e.g., as described below.

In some demonstrative aspects, controller 154 may be configured to control, trigger, cause, and/or instruct the non-AP STA implemented by device 140 to transmit the non-TB PPDU, for example, according to the transmission-configuration, e.g., as described below.

In some demonstrative aspects, controller 154 may be configured to control, trigger, cause, and/or instruct the non-AP STA implemented by device 140 to identify the transmission-configuration information as part of the trigger frame, e.g., as described below.

In other aspects, controller 154 may be configured to control, trigger, cause, and/or instruct the non-AP STA implemented by device 140 to identify the transmission-configuration information based on a transmission from the AP prior to the trigger frame.

In other aspects, the transmission-configuration information may be transmitted by the AP as part of any other suitable transmission at any other suitable timing.

In some demonstrative aspects, controller 124 may be configured to control, trigger, cause, and/or instruct the AP implemented by device 102 to transmit to the non-AP STA traffic-characterization information, which may be configured to define one or more parameters to characterize the latency-sensitive traffic to be communicated during the contention-based time period, e.g., as described below.

In some demonstrative aspects, controller 154 may be configured to control, trigger, cause, and/or instruct the non-AP STA implemented by device 140 to determine one or more parameters to characterize the latency-sensitive traffic to be communicated during the contention-based time period, for example, based on the traffic-characterization information from the AP, e.g., as described below.

In some demonstrative aspects, controller 124 may be configured to control, trigger, cause, and/or instruct the AP implemented by device 102 to negotiate with the non-AP STA one or more parameters to characterize the latency-sensitive traffic to be communicated during the contention-based time period, e.g., as described below.

In some demonstrative aspects, controller 154 may be configured to control, trigger, cause, and/or instruct the non-AP STA implemented by device 140 to negotiate with the AP one or more parameters to characterize the latency-sensitive traffic to be communicated during the contention-based time period, e.g., as described below.

In some demonstrative aspects, device 102 and/or device 140 may be configured to implement one or more operations of a scheduling technique, which may be configured to provide a technical solution to support scheduling at an AP, e.g., the AP implemented by device 102, communications of one or more non-AP STAs, e.g., including the non-AP STA implemented by device 140, e.g., as described below.

In some demonstrative aspects, the scheduling technique may be configured to provide a technical solution to support an AP in allowing one or more non-AP STAs having latency-sensitive traffic to transmit the latency-sensitive traffic, for example, according to a channel contention mechanism during a contention-based time period, e.g., as described below.

In some demonstrative aspects, the AP may use a predefined AID (also referred to as a "special AID") and/or a bitmap to allocate time to several STAs which may have potential latency-sensitive traffic, e.g., potential UL and/or P2P latency-sensitive traffic.

In some demonstrative aspects, the AP may transmit to the one or more non-AP STAs a trigger frame including an AID field set to the predefined AID.

In some demonstrative aspects, the AP may transmit the trigger frame (also referred to as an "SU-Trigger frame") with the predefined AID, for example, inside an r-TWT SP, for example, to signal that all members of this r-TWT may use the allocated time to transmit traffic, e.g., critical low-latency traffic.

In some demonstrative aspects, the AP may transmit the trigger frame with the predefined AID, for example, to signal that all STAs with critical low-latency traffic may contend and transmit during the allocated time.

In some demonstrative aspects, a non-AP STA may be configured to identify, define, and/or determine which traffic is to be treated and/or classified as critical low-latency traffic, for example, based on an element, e.g., a QoS Characteristics element, which may be exchanged with the AP, for example, through a management (Mgt) frame exchange between the non-AP STA and the AP.

In some demonstrative aspects, the non-AP STA and the AP may negotiate one or more parameters to identify, define, and/or determine which traffic is to be treated and/or classified as critical low-latency traffic.

In some demonstrative aspects, the non-AP STA and the AP may negotiate one or more parameters to identify, define, and/or determine which traffic is to be treated and/or classified as critical low-latency traffic, for example, based on one or more predefined criteria and/or parameters, e.g., which may be defined in accordance with a Standard and/or Specification.

In some demonstrative aspects, the non-AP STA and the AP may negotiate one or more parameters to identify, define, and/or determine which traffic is to be treated and/or classified as critical low-latency traffic, for example, based on one or more predefined criteria and/or parameters, e.g., which may be implementation specific.

In some demonstrative aspects, a non-AP STA having critical low-latency traffic may use one or more parameters for contention during the allocated time.

For example, the one or more parameters used for contention may be a function of remaining delay tolerance, priority of the transmission, and/or any other additional or alternative criterion and/or parameter. For example, a STA containing an application with lower delay budget may use more aggressive parameters than other STAs.

In some demonstrative aspects, the AP may communicate information regarding a plurality of STAs that are to be allowed to contend for transmission during the allocated time period.

In one example, the AP may indicate which STAs are to be allowed contend during the allocated time period, for example, by including a bitmap in the trigger frame.

In another example, the AP may indicate which STAs are to be allowed contend during the allocated time period, for example, by preceding the transmission of the trigger frame with another frame, e.g., an Opportunistic Power Save (OPS) frame and/or any other type of frame, which may be configured to signal which STAs are to be scheduled for contention during the allocated time.

In some demonstrative aspects, the trigger frame may include time-offset information, which may be configured to indicate allocation of a plurality of mini-contention periods within an obtained TxOP, for example, with a single trigger frame.

In some demonstrative aspects, the scheduling technique may be configured to define, for example, that following a reception of a trigger frame allocating contention periods, only allocated STAs, e.g., addressed STAs, may be allowed to participate in contention, e.g., with specific aggressive EDCA parameters.

In some demonstrative aspects, the scheduling technique may be configured to define, for example, that following a reception a trigger frame allocating contention periods, STAs that are not allocated, e.g., STAs that are not addressed, may be allowed to participate in contention, for example, using less aggressive and/or default EDCA parameters.

In some demonstrative aspects, the scheduling technique may be configured to define, for example, that an AP may transmit to the STA one or more transmission parameters to be used by the STA within the contention-based allocated time, which is to be allocated by the trigger frame.

For example, the one or more transmission parameters may include a PPDU duration limit to be applied to PPDUs to be transmitted during the allocated time, a TxOP limit to be applied to PPDUs to be transmitted during the allocated time, a transmission type, e.g., a P2P transmission or an UL transmission, to be allowed during the allocated time, and/or any other additional or alternative parameters.

In some demonstrative aspects, one or more of the transmission parameters to be used by the STA within the allocated time may be specified by the AP, for example, with a semi-static signaling, e.g., in a pre-signaled and/or pre-negotiated manner.

In some demonstrative aspects, one or more of the transmission parameters to be used by the STA within the allocated time may be specified by the AP, for example, in a dynamic manner, e.g., by including an indication of the transmission parameters as part of the trigger frame itself.

In some demonstrative aspects, the trigger frame may be used by the AP, e.g., acting as a Sharing AP, to allocate time to other BSSs for transmitting traffic using EDCA.

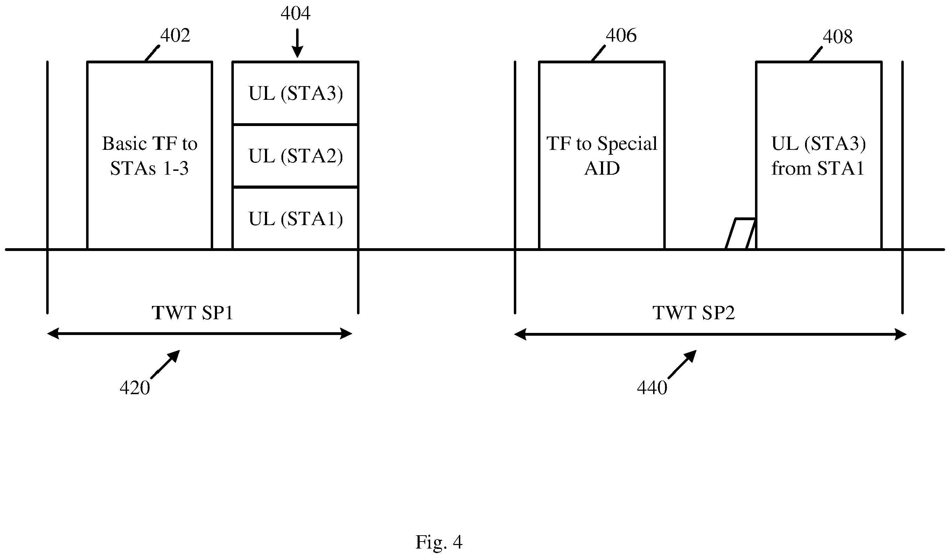

Reference is made to Fig. 4, which schematically illustrates an allocation of a contention-based time period for latency-sensitive traffic, in accordance with some demonstrative aspects.

In some demonstrative aspects, device 102 (Fig. 1) and/or device 140 (Fig. 1) may be configured to perform one or more operations and/or functionalities with respect to the allocation of the contention-based time period for latency-sensitive traffic.

In some demonstrative aspects, as shown in Fig. 4, an AP may transmit a trigger frame 402, e.g., a basic trigger frame, to solicit UL transmissions 404 from a plurality of STAs (STA 1, STA 2, and STA 3) during a TWT SP 420 (TWT SP 1).

For example, device 102 (Fig. 1) may be configured to perform one or more operations and/or functionalities of the AP, and/or device 140 (Fig. 1) may be configured to perform one or more operations and/or functionalities of a non-AP STA of the plurality of STAs, e.g., the STA 3.

In some demonstrative aspects, as shown in Fig. 4, the AP may be configured to transmit a trigger frame 406 to solicit transmissions, e.g., UL transmissions and/or P2P transmissions in a TWT SP 440 (TWT SP 2), e.g., a subsequent TWT SP following the TWT SP 420.

In some demonstrative aspects, the AP may set an AID field in the trigger frame 406 to a predefined AID value, which may be configured to indicate that a non-AP STA, having latency-sensitive traffic is to be allowed to transmit a non-TB PPDU including the latency-sensitive traffic, for example, according to a channel contention mechanism during the TWT SP 440.

In some demonstrative aspects, the AP may transmit trigger frame 406 to solicit UL transmissions from STAs 1-3 in TWT SP 440, for example, even without knowing the exact remaining traffic to be delivered by those STAs after getting allocation in the TWT SP 420.

For example, as shown in Fig. 4, only STA3 may have remaining traffic to be delivered in TWT SP 440.

In some demonstrative aspects, as shown in Fig. 4, the STA 3 may content to transmit an UL transmission 408 including the latency-sensitive traffic.

In some demonstrative aspects, as shown in Fig. 4, the AP may receive from STA3 an UL transmission 408 including the latency-sensitive traffic.

Referring back to Fig. 1, in some demonstrative aspects, device 102 and/or device 140 may be configured to communicate an MU RTS trigger frame configured to allocate a contention-based time period, e.g., as described below.

In some demonstrative aspects, the MU RTS trigger frame may include a TxOP sharing mode subfield configured to indicate that the MU RTS trigger frame is to allocate time for low-latency frame transmissions, e.g., as described below.

For example, the TxOP sharing mode subfield may be defined according to the following table:

**Table 1**

| Triggered TXOP Sharing Mode subfield value | Description |
|---|---|
| 0 | MU-RTS that does not initiate MU-RTS TXOP sharing procedure. |
| 1 | MU-RTS that initiates MU-RTS TXOP sharing procedure wherein a scheduled STA can only transmit MPDU(s) addressed to its associated AP. |
| 2 | MU-RTS that initiates MU-RTS TXOP sharing procedure wherein a scheduled STA can transmit MPDU(s) addressed to its associated AP or addressed to another STA. |
| 3 | MU-RTS that allocates time for low latency frame transmissions |

For example, the TxOP sharing mode subfield may be set to a value of 3 to indicate a TxOP sharing mode ("mode 3") to define that the MU RTS trigger frame is to be used to allocate time for low latency frame transmissions.

In some demonstrative aspects, the MU RTS trigger frame may include a user info field including one or more parameters, which may be configured to define communication of latency-sensitive traffic during the time allocated by the MU RTS trigger frame, e.g., as described below.

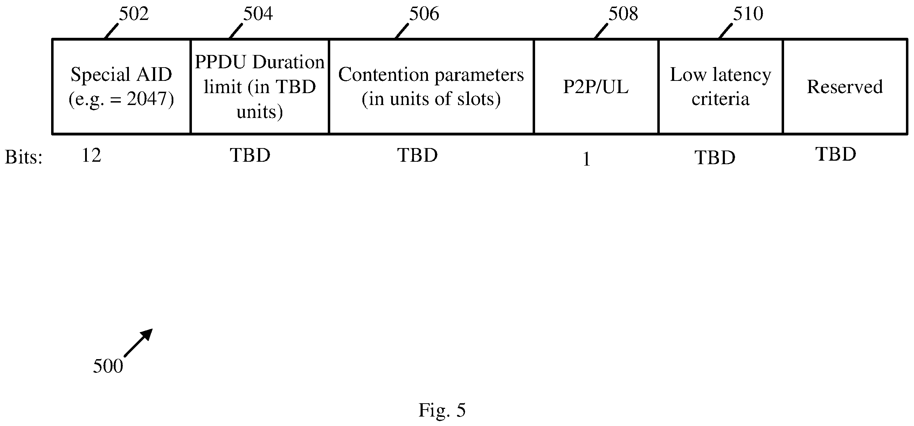

Reference is made to Fig. 5, which schematically illustrates a format of a user info field 500, in accordance with some demonstrative aspects.

In some demonstrative aspects, device 102 (Fig. 1) and/or device 140 (Fig. 1) may be configured to communicate a trigger frame including one or more subfields of user info field 500, for example, to allocate a contention-based time period. For example, device 102 (Fig. 1) may be configured to transmit to device 140 (Fig. 1) the trigger frame including user info field 500; and/or device 140 (Fig. 1) may be configured to identify one or more parameters in user info field 500 of the trigger frame received from device 102 (Fig. 1).

In some demonstrative aspects, user info field 500 may be communicated as part of an MU RTS trigger frame.

In some demonstrative aspects, user info field 500 may be included in the MU RTS trigger frame including a TxOP sharing mode subfield set to indicate that the MU RTS trigger frame is to be used to allocate time for low latency frame transmissions. For example, one or more of the subfields of user info field 500 may be included in the MU RTS trigger frame, for example, when the TxOP sharing mode subfield of the MU RTS trigger frame is set to 3.

In other aspects, user info field 500 may be communicated as part of any other type of trigger frame to allocate a contention-based time period, e.g., for low latency frame transmissions.

In some demonstrative aspects, as shown in Fig. 5, user info field 500 may include an AID subfield 502, which may be set to a predefined AID (also referred to as a "special AID") configured to indicate that a non-AP STA, e.g., a STA implemented by device 140 (Fig. 1), is to be allowed to transmit latency-sensitive traffic, for example, according to a channel contention mechanism during a contention-based time period to be allocated by the trigger frame including user info field 500.

In one example, a value of AID subfield 502 may be set to 2047, for example, to indicate that the trigger frame including user info field 500 is to be used to allocate time for low latency frame transmissions. In another example, AID subfield 502 may be set to any other suitable predefined AID value to indicate that the trigger frame including user info field 500 is to be used to allocate time for low latency frame transmissions.

In some demonstrative aspects, as shown in Fig. 5, user info field 500 may include a PPDU duration limit subfield 504, which may be configured to signal a maximum PPDU duration for one or more STAs that are to transmit within the allocated time, which is allocated by the trigger frame including user info field 500.

In some demonstrative aspects, as shown in Fig. 5, user info field 500 may include a contention parameters subfield 506.

In some demonstrative aspects, contention parameters subfield 506 may include one or more contention parameters, which may be used to perform an ad-hoc time-offset among a plurality of allocated STAs. For example, contention parameters subfield 506 may be configured to signal an integer N, for example, such that one or more allocated STAs, e.g., all allocated STAs, are to perform backoff within the allocated time using a uniform random number between 0 and *N*aSlotDuration.*

In some demonstrative aspects, as shown in Fig. 5, user info field 500 may include a transmission type subfield 508 configured to indicate a type of transmission to be communicated within the allocated time, which is allocated by the trigger frame including user info field 500.

In one example, transmission type subfield 508 may be set to an UL indication, which may be configured to indicate that a non-AP STA is to be allowed to transmit a non-TB PPDU including an UL transmission of latency-sensitive traffic from the non-AP STA to the AP from which the trigger frame is transmitted, e.g., an AP implemented by device 102 (Fig. 1).

In one example, transmission type subfield 508 may be set to a P2P indication, which may be configured to indicate that a non-AP STA is to be allowed to transmit a non-TB PPDU including a P2P transmission of latency-sensitive traffic from the non-AP STA to another non-AP STA.

In some demonstrative aspects, as shown in Fig. 5, user info field 500 may include a low latency criteria subfield 510, which may be configured to signal one or more optional parameters to be used by STAs to determine if they are allowed to transmit within the allocated time. For example, low latency criteria subfield 510 may indicate criteria to allow a non-AP STA to determine whether traffic to be transmitted by the STA may be treated as low-latency traffic for the purpose of transmission during the allocated time.

Referring back to Fig. 1, in some demonstrative aspects, device 102 and/or device 140 may be configured to perform one or more operations and/or functionalities according to a DL traffic communication mechanism, which may be configured to provide a technical solution to support communication of latency-sensitive traffic, e.g., as described below.

For example, the DL traffic communication mechanism may be configured to provide a technical solution to support handling jitter for DL traffic, e.g., as described below.

In some demonstrative aspects, the DL traffic communication mechanism may define that an AP, e.g., an AP implemented by device 102, may be allowed to signal one or more time points within a an allocated time period, e.g., an SP and/or a TxOP, where a STA may be expected to be present and able to receive a DL resource allocation from the AP, e.g., as described below.

In some demonstrative aspects, the DL traffic communication mechanism may be configured to provide a technical solution to reserve power at the non-AP STA, for example, to allow the non-AP STA to conserve power within a relatively long SP, for example, even without substantially increasing peak latency.

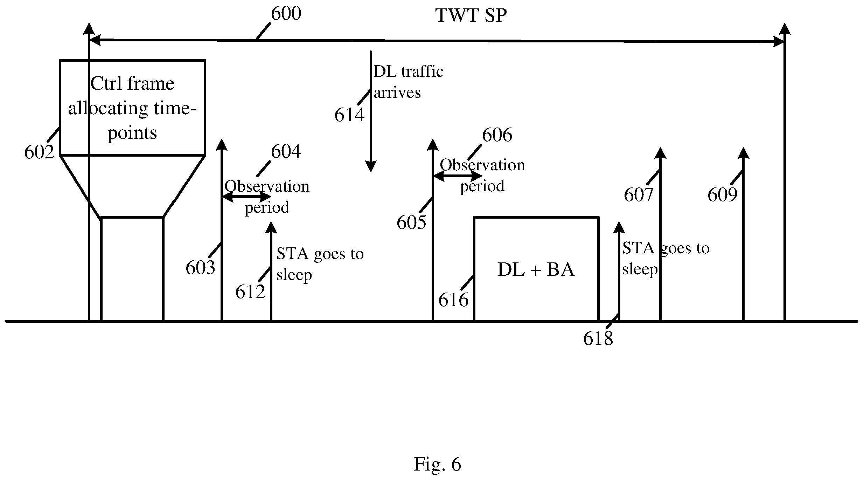

Reference is made to Fig. 6, which schematically illustrates communications by a first wireless communication device and a second wireless communication device during a TWT SP 600, in accordance with some demonstrative aspects.

For example, an AP, e.g., an AP implemented by device 102 (Fig. 1), and a STA, e.g., a STA implemented by device 140 (Fig. 1), may be configured to communicate during the TWT SP 600, for example, according to a DL traffic communication mechanism.

In some demonstrative aspects, the DL traffic communication mechanism may be configured to handle DL traffic with jitter, e.g., as described below.

In some demonstrative aspects, as shown in Fig. 6, the AP, e.g., the AP implemented by device 102 (Fig. 1), may transmit a frame 602, e.g., including a control (Ctrl) frame or a trigger frame, during TWT SP 600.

In some demonstrative aspects, the AP may transmit frame 602 to a set of STAs, for example, to inform the STAs of one or more time periods (slots) within TWT SP 600 when the STAs may need to be present, e.g., as described below.

In some demonstrative aspects, the slot may be defied based on a start time of the slot and a duration of the slot, e.g., as described below. In other aspects, the slots may be defined according to any other parameters, e.g., a start time and a periodicity.

In some demonstrative aspects, the AP may transmit frame 602to the set of STAs, for example, to inform the STAs of one or more time-points (also referred to as "slot start times") within TWT SP 600 when the STAs may need to be present, e.g., for the duration of a time period ("observation period").

In one example, the AP may signal the one or more time-points in a modified trigger frame. According to this example, the modified trigger frame may include information regarding the one or more time-points, e.g., periodicity of the time-points, an observation period duration for a time-point, and/or any other characteristics of the time-points and/or observation periods. For example, the information regarding the one or more time-points and/or observation periods may be included in a user info field, and/or in a common info field of the frame.

In some demonstrative aspects, as shown in Fig. 6, the AP may transmit frame 602 to signal four start time-points (slot start times) to one or more STAs, e.g., including a STA implemented by device 140 (Fig. 1).

For example, as shown in Fig. 6, frame 602 may indicate a start time-point 603, a start time-point 605, a start time-point 607, and/or a start time-point 609.

In some demonstrative aspects, the one or more time-points may indicate a beginning of one or more respective observation periods, during which the STA is required to stay awake, e.g., to be present to receive DL frames from the AP.

For example, as shown in Fig. 6, time-point 603 may indicate the beginning of an observation period 604, and/or time-point 605 may indicate the beginning of an observation period 606.

In some demonstrative aspects, the AP may configure the frame 602, e.g., the control frame or the trigger frame, to address one or more STAs.

In some demonstrative aspects, a STA addressed by the AP in frame 602 may wake up, e.g., may be required to wake up, for example, at a next time-point indicated by the frame 602. For example, the STA addressed by the frame 602 may be required to wait for its allocation, e.g., for DL traffic, for example, for a duration of an observation period beginning at the time-point.

For example, as shown in Fig. 6, the STA may be configured to identify the time-point 602 and/or the time-point 603. For example, as shown in Fig. 6, the STA may be configured to wake up at time-point 603 and stay awake during observation period 604, and/or wake up at time-point 605 and stay awake during observation period 606.

In some demonstrative aspects, the STA may determine that there is not going to be any allocation within the observation period, e.g., within a wake up slot. For example, the STA may determine that there is not going to be any allocation within the observation period, for example, when the STA does not receive any DL packet and/or allocation within the observation period.

In some demonstrative aspects, the STA may be allowed to doze off, for example, until a next observation period, for example, based on the determination that there is not going to be any allocation within the current observation period.

For example, as shown in Fig. 6, after the STA does not receive any DL frame for itself in a first wake up slot, e.g., within the first observation period 604, the STA may go to sleep, for example, until a second wake up slot, e.g., at the time-point 605.

For example, as shown in Fig. 6, the STA may go to sleep at a time 612, e.g., at the end of observation period 604, for example, when the STA does not receive any DL frame during observation period 604.

In some demonstrative aspects, as shown in Fig. 6, the AP may have DL traffic ready for transmission to the STA, e.g., at a time 614 between observation period 604 and observation period 606.

In some demonstrative aspects, as shown in Fig. 6, the STA may wake up at time-point 605 and stay awake during observation period 606.

In some demonstrative aspects, as shown in Fig. 6, the AP may allocate to the STA an allocation for the DL traffic to the STA, for example, during the observation period 606.

In some demonstrative aspects, as shown in Fig. 6, the STA may receive from the AP a DL frame 616, which may include the traffic that arrived at the AP between the first and second wake up slots, for example, at the time 614 after the end of observation period 604 and before the time-point 605.

In some demonstrative aspects, as shown in Fig. 6, the STA may remain present on the channel, for example, until a DL frame exchange sequence is complete.

In some demonstrative aspects, as shown in Fig. 6, the STA may go to sleep at a time 618, for example, after the end of the DL frame exchange in the second wake up slot.

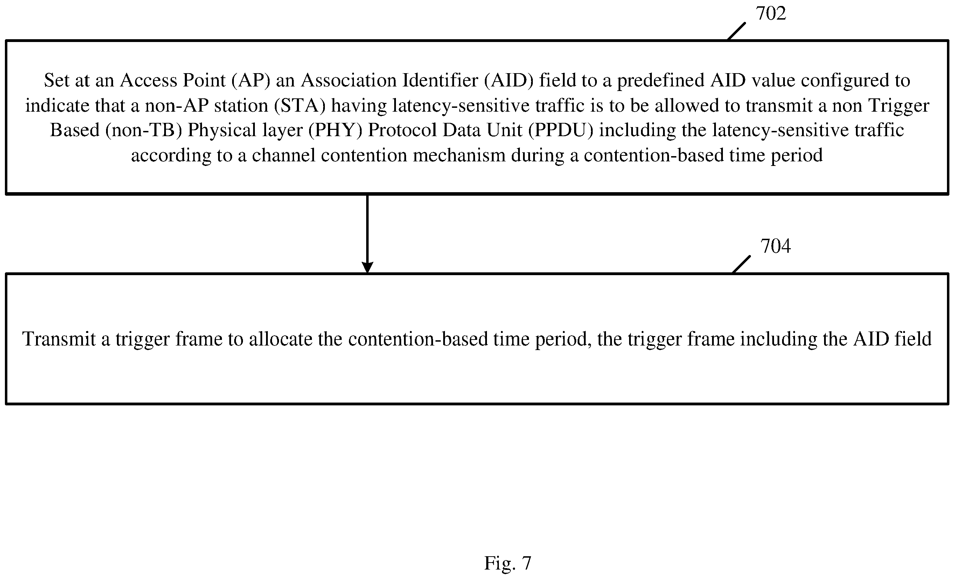

Reference is made to Fig. 7, which schematically illustrates a method of a contention-based time period allocation for latency-sensitive traffic, in accordance with some demonstrative aspects. For example, one or more of the operations of the method of Fig. 7 may be performed by one or more elements of a system, e.g., system 100 (Fig. 1), for example, one or more wireless devices, e.g., device 102 (Fig. 1), and/or device 140 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 702, the method may include setting at an AP an AID field to a predefined AID value. For example, the predefined AID value may be configured to indicate that a non-AP STA having latency-sensitive traffic is to be allowed to transmit a non-TB PPDU. For example, the non-TB PPDU including the latency-sensitive traffic may be transmitted according to a channel contention mechanism during a contention-based time period. For example, controller 124 (Fig. 1) may be configured to cause, trigger, and/or control an AP implemented by device 102 (Fig. 1) to set the AID field to the predefined AID value, e.g., as described above.

As indicated at block 704, the method may include transmitting a trigger frame to allocate the contention-based time period. For example, the trigger frame may include the AID field. For example, controller 124 (Fig. 1) may be configured to cause, trigger, and/or control the AP implemented by device 102 (Fig. 1) to transmit a trigger frame, which includes the AID field with the predefined AID value, to allocate the contention-based time period, e.g., as described above.

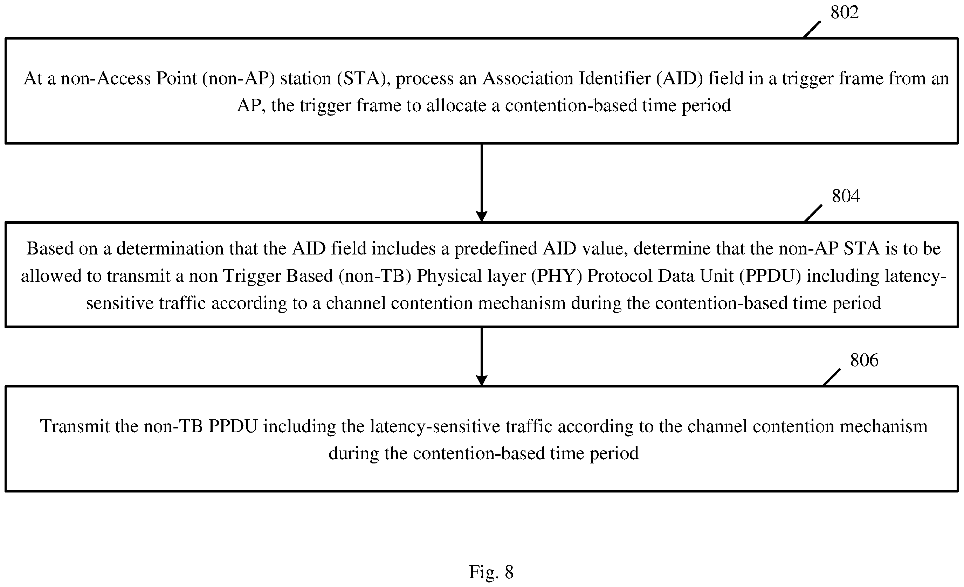

Reference is made to Fig. 8, which schematically illustrates a method of a contention-based time period allocation for latency-sensitive traffic, in accordance with some demonstrative aspects. For example, one or more of the operations of the method of Fig. 8 may be performed by one or more elements of a system, e.g., system 100 (Fig. 1), for example, one or more wireless devices, e.g., device 102 (Fig. 1), and/or device 140 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 802, the method may include processing at a non-AP STA an AID field in a trigger frame from an AP. For example, the trigger frame may be configured to allocate a contention-based time period. For example, controller 154 (Fig. 1) may be configured to cause, trigger, and/or control a non-AP STA implemented by device 140 (Fig. 1) to process an AID field in a trigger frame from an AP, e.g., as described above.

As indicated at block 804, the method may include determining that the non-AP STA is to be allowed to transmit a non-TB PPDU including latency-sensitive traffic according to a channel contention mechanism during the contention-based time period, for example, based on a determination that the AID field includes a predefined AID value.. For example, controller 154 (Fig. 1) may be configured to cause, trigger, and/or control the non-AP STA implemented by device 140 (Fig. 1) to determine that the non-AP STA is to be allowed to transmit a non-TB PPDU including latency-sensitive traffic, for example, according to a channel contention mechanism during the contention-based time period, for example, based on a determination that the AID field includes the predefined AID value, e.g., as described above.

As indicated at block 806, the method may include transmitting the non-TB PPDU including the latency-sensitive traffic according to the channel contention mechanism during the contention-based time period. For example, controller 154 (Fig. 1) may be configured to cause, trigger, and/or control the non-AP STA implemented by device 140 (Fig. 1) to transmit the non-TB PPDU including the latency-sensitive traffic according to the channel contention mechanism during the contention-based time period, e.g., as described above.

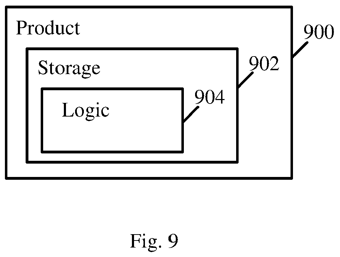

Reference is made to Fig. 9, which schematically illustrates a product of manufacture 900, in accordance with some demonstrative aspects. Product 900 may include one or more tangible computer-readable ("machine-readable") non-transitory storage media 902, which may include computer-executable instructions, e.g., implemented by logic 904, operable to, when executed by at least one computer processor, enable the at least one computer processor to implement one or more operations at device 102 (Fig. 1), device 140 (Fig. 1), radio 114 (Fig. 1), radio 144 (Fig. 1), transmitter 118 (Fig. 1), transmitter 148 (Fig. 1), receiver 116 (Fig. 1), receiver 146 (Fig. 1), message processor 128 (Fig. 1), message processor 158 (Fig. 1), controller 124 (Fig. 1), and/or controller 154 (Fig. 1), to cause device 102 (Fig. 1), device 140 (Fig. 1), radio 114 (Fig. 1), radio 144 (Fig. 1), transmitter 118 (Fig. 1), transmitter 148 (Fig. 1), receiver 116 (Fig. 1), receiver 146 (Fig. 1), message processor 128 (Fig. 1), message processor 158 (Fig. 1), controller 124 (Fig. 1), and/or controller 154 (Fig. 1), to perform, trigger and/or implement one or more operations and/or functionalities, and/or to perform, trigger and/or implement one or more operations and/or functionalities described with reference to the Figs. 1, 2, 3, 4, 5, 6, 7, and/or 8, and/or one or more operations described herein. The phrases "non-transitory machine-readable medium" and "computer-readable non-transitory storage media" may be directed to include all machine and/or computer readable media, with the sole exception being a transitory propagating signal.

In some demonstrative aspects, product 900 and/or machine-readable storage media 902 may include one or more types of computer-readable storage media capable of storing data, including volatile memory, non-volatile memory, removable or non-removable memory, erasable or non-erasable memory, writeable or re-writeable memory, and the like. For example, machine-readable storage media 902 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), flash memory (e.g., NOR or NAND flash memory), content addressable memory (CAM), polymer memory, phase-change memory, ferroelectric memory, silicon-oxide-nitride-oxide-silicon (SONOS) memory, a disk, a hard drive, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative aspects, logic 904 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative aspects, logic 904 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, machine code, and the like.

### EXAMPLES

The following examples pertain to further aspects.

Example 1 includes an apparatus comprising logic and circuitry configured to cause an Access Point (AP) to set an Association Identifier (AID) field to a predefined AID value configured to indicate that a non-AP station (STA) having latency-sensitive traffic is to be allowed to transmit a non-Trigger-Based (non-TB) Physical layer (PHY) Protocol Data Unit (PPDU) comprising the latency-sensitive traffic according to a channel contention mechanism during a contention-based time period; and transmit a trigger frame to allocate the contention-based time period, the trigger frame comprising the AID field.

Example 2 includes the subject matter of Example 1, and optionally, wherein the apparatus is configured to cause the AP to transmit STA-identification information configured to identify a plurality of allocated non-AP STAs, which are to be allowed to transmit non-TB PPDUs with latency-sensitive traffic according to the channel contention mechanism during the contention-based time period.

Example 3 includes the subject matter of Example 2, and optionally, wherein the STA-identification information comprises a bitmap, wherein a bit in the bitmap is configured to indicate whether a particular non-AP STA corresponding to a bit location of the bit is to be included in the plurality of allocated non-AP STAs.

Example 4 includes the subject matter of Example 2 or 3, and optionally, wherein the apparatus is configured to cause the AP to transmit the STA-identification information as part of the trigger frame.

Example 5 includes the subject matter of any one of Examples 2-4, and optionally, wherein the apparatus is configured to cause the AP to transmit the STA-identification information prior to the trigger frame.

Example 6 includes the subject matter of any one of Examples 1-5, and optionally, wherein the trigger frame comprises time-offset information configured to indicate time-offsets between a plurality of contention-based time periods to be allocated by the trigger frame.

Example 7 includes the subject matter of any one of Examples 1-6, and optionally, wherein the predefined AID value is configured to indicate that one or more first non-AP STAs having latency-sensitive traffic are to be allowed to transmit during the contention-based time period according to a first Enhanced Distributed Channel Access (EDCA) parameter set, and that one or more second non-AP STAs are to be allowed to transmit during the contention-based time period according to a second EDCA parameter set, wherein the first EDCA parameter set is configured to provide prioritized channel access relative to the second EDCA parameter set.

Example 8 includes the subject matter of any one of Examples 1-7, and optionally, wherein the apparatus is configured to cause the AP to transmit transmission-configuration information configured to indicate a transmission-configuration of the non-TB PPDU.

Example 9 includes the subject matter of Example 8 wherein the transmission-configuration information is configured to indicate at least one of a PPDU duration limit, a Transmit Opportunity (TxOP) limit, or a transmission type.

Example 10 includes the subject matter of Example 8 or 9, and optionally, wherein the apparatus is configured to cause the AP to transmit the transmission-configuration information as part of the trigger frame.

Example 11 includes the subject matter of any one of Examples 8-10, and optionally, wherein the apparatus is configured to cause the AP to transmit the transmission-configuration information prior to the trigger frame.

Example 12 includes the subject matter of any one of Examples 1-11, and optionally, wherein the apparatus is configured to cause the AP to transmit to the non-AP STA traffic-characterization information configured to define one or more parameters to characterize the latency-sensitive traffic.

Example 13 includes the subject matter of any one of Examples 1-12, and optionally, wherein the apparatus is configured to cause the AP to negotiate with the non-AP STA one or more parameters to characterize the latency-sensitive traffic.

Example 14 includes the subject matter of any one of Examples 1-13, and optionally, wherein the apparatus is configured to cause the AP to transmit the trigger frame during a Transmit Opportunity (TxOP) of the AP, the trigger frame configured to allocate the contention-based time period during the TxOP.

Example 15 includes the subject matter of any one of Examples 1-13, and optionally, wherein the apparatus is configured to cause the AP to transmit the trigger frame during a restricted Target Wake Time (r-TWT) Service Period (SP), wherein the predefined AID value is configured to indicate that non-AP STAs, which are members of the r-TWT SP, are to be allowed to transmit non-TB PPDUs during the contention-based time period.

Example 16 includes the subject matter of any one of Examples 1-15, and optionally, wherein the trigger frame comprises a Multi-user (MU) Request to Send (RTS) trigger frame.

Example 17 includes the subject matter of Example 16, and optionally, wherein the apparatus is configured to cause the AP to set a predefined Transmit Opportunity (TxOP) sharing mode subfield value in a TxOP sharing mode subfield of the MU RTS trigger frame, wherein the predefined TxOP sharing mode subfield value is configured to indicate that the MU RTS trigger frame is to allocate time for low-latency frame transmissions.

Example 18 includes the subject matter of Example 17, and optionally, wherein the predefined TxOP sharing mode subfield value is 3.

Example 19 includes the subject matter of any one of Examples 16-18, and optionally, wherein the apparatus is configured to cause the AP to set the AID field comprising the predefined AID value in a user Information (info) field of the MU RTS trigger frame.

Example 20 includes the subject matter of Example 19, and optionally, wherein the apparatus is configured to cause the AP to set in the user info field at least one of a PPDU duration limit subfield, a contention parameter subfield, a non-TB PPDU transmission type subfield, or a low-latency criteria subfield.

Example 21 includes the subject matter of any one of Examples 1-20, and optionally, wherein the non-TB PPDU comprises an Uplink (UL) transmission of latency-sensitive traffic from the non-AP STA to the AP.

Example 22 includes the subject matter of any one of Examples 1-20, and optionally, wherein the non-TB PPDU comprises a Peer-to Peer (P2P) transmission of latency-sensitive traffic from the non-AP STA to the AP or to another non-AP STA.

Example 23 includes the subject matter of any one of Examples 1-22, and optionally, wherein the predefined AID value is 2047.

Example 24 includes the subject matter of any one of Examples 1-22, and optionally, wherein the trigger frame comprises a Single-User (SU) trigger frame.

Example 25 includes the subject matter of any one of Examples 1-24, and optionally, comprising at least one radio to transmit the trigger frame.

Example 26 includes the subject matter of Example 25, and optionally, comprising one or more antennas connected to the radio, and a processor to execute instructions of an operating system.

Example 27 includes an apparatus comprising logic and circuitry configured to cause a non-Access Point (AP) (non-AP) station (STA) to process an Association Identifier (AID) field in a trigger frame from an AP, the trigger frame to allocate a contention-based time period; based on a determination that the AID field comprises a predefined AID value, determine that the non-AP STA is to be allowed to transmit a non-Trigger-Based (non-TB) Physical layer (PHY) Protocol Data Unit (PPDU) comprising latency-sensitive traffic according to a channel contention mechanism during the contention-based time period; and transmit the non-TB PPDU comprising the latency-sensitive traffic according to the channel contention mechanism during the contention-based time period.

Example 28 includes the subject matter of Example 27, and optionally, wherein the apparatus is configured to cause the non-AP STA to determine, based on STA-identification information from the AP, whether the non-AP STA is included in a plurality of allocated non-AP STAs, which are to be allowed to transmit non-TB PPDUs with latency-sensitive traffic according to the channel contention mechanism during the contention-based time period.

Example 29 includes the subject matter of Example 28, and optionally, wherein the apparatus is configured to cause the non-AP STA to determine whether the non-AP STA is included in the plurality of allocated non-AP STAs based on a value of a bit in a bitmap in the STA-identification information, wherein a bit location of the bit corresponds to the non-AP STA.

Example 30 includes the subject matter of Example 28 or 29, and optionally, wherein the apparatus is configured to cause the non-AP STA to identify the STA-identification information as part of the trigger frame.

Example 31 includes the subject matter of any one of Examples 28-30, and optionally, wherein the apparatus is configured to cause the non-AP STA to identify the STA-identification information in a transmission received from the AP prior to the trigger frame.

Example 32 includes the subject matter of any one of Examples 27-31, and optionally, wherein the apparatus is configured to cause the non-AP STA to determine, based on time-offset information in the trigger frame, time-offsets between a plurality of contention-based time periods to be allocated by the trigger frame.

Example 33 includes the subject matter of any one of Examples 27-32, and optionally, wherein the predefined AID value is configured to indicate that one or more first non-AP STAs having latency-sensitive traffic are to be allowed to transmit during the contention-based time period according to a first Enhanced Distributed Channel Access (EDCA) parameter set, and that one or more second non-AP STAs are to be allowed to transmit during the contention-based time period according to a second EDCA parameter set, wherein the first EDCA parameter set is configured to provide prioritized channel access relative to the second EDCA parameter set.

Example 34 includes the subject matter of any one of Examples 27-33, and optionally, wherein the apparatus is configured to cause the non-AP STA to determine a transmission-configuration based on transmission-configuration information from the AP, and to transmit the non-TB PPDU according to the transmission-configuration.

Example 35 includes the subject matter of Example 34, and optionally, wherein the apparatus is configured to cause the non-AP STA to determine based on the transmission-configuration information at least one of a PPDU duration limit, a Transmit Opportunity (TxOP) limit, or a transmission type.

Example 36 includes the subject matter of Example 34 or 35, and optionally, wherein the apparatus is configured to cause the non-AP STA to identify the transmission-configuration information as part of the trigger frame.

Example 37 includes the subject matter of any one of Examples 34-36, and optionally, wherein the apparatus is configured to cause the non-AP STA to determine the transmission-configuration information based on a transmission from the AP prior to the trigger frame.

Example 38 includes the subject matter of any one of Examples 27-37, and optionally, wherein the apparatus is configured to cause the non-AP STA determine one or more parameters to characterize the latency-sensitive traffic based on traffic-characterization information from the AP.

Example 39 includes the subject matter of any one of Examples 27-38, and optionally, wherein the apparatus is configured to cause the non-AP STA to negotiate with the AP one or more parameters to characterize the latency-sensitive traffic.

Example 40 includes the subject matter of any one of Examples 27-39, and optionally, wherein the apparatus is configured to cause the non-AP STA to identify, based on receipt of the trigger frame during a Transmit Opportunity (TxOP) of the AP, that the trigger frame is to allocate the contention-based time period during the TxOP.

Example 41 includes the subject matter of any one of Examples 27-40, and optionally, wherein the apparatus is configured to cause the non-AP STA to identify, based on receipt of the trigger frame during a restricted Target Wake Time (r-TWT) Service Period (SP), that the predefined AID value is to indicate that non-AP STAs, which are members of the r-TWT SP, are to be allowed to transmit non-TB PPDUs during the contention-based time period.

Example 42 includes the subject matter of any one of Examples 27-41, and optionally, wherein the trigger frame comprises a Multi-user (MU) Request to Send (RTS) trigger frame.

Example 43 includes the subject matter of Example 42, and optionally, wherein the apparatus is configured to cause the non-AP STA to identify a predefined Transmit Opportunity (TxOP) sharing mode subfield value in a TxOP sharing mode subfield of the MU RTS trigger frame, the predefined TxOP sharing mode subfield value is configured to indicate that the MU RTS trigger frame is to allocate time for low-latency frame transmissions.

Example 44 includes the subject matter of Example 42, and optionally, wherein the predefined TxOP sharing mode subfield value is 3.

Example 45 includes the subject matter of any one of Examples 42-44, and optionally, wherein the apparatus is configured to cause the non-AP STA to identify the AID field comprising the predefined AID value in a user Information (info) field of the MU RTS trigger frame.

Example 46 includes the subject matter of Example 45, and optionally, wherein the apparatus is configured to cause the non-AP STA to identify in the user info field at least one of a PPDU duration limit subfield, a contention parameter subfield, a non-TB PPDU transmission type subfield, or a low-latency criteria subfield.

Example 47 includes the subject matter of any one of Examples 27-46, and optionally, wherein the non-TB PPDU comprises an Uplink (UL) transmission of latency-sensitive traffic from the non-AP STA to the AP.

Example 48 includes the subject matter of any one of Examples 27-47, and optionally, wherein the non-TB PPDU comprises a Peer-to Peer (P2P) transmission of latency-sensitive traffic from the non-AP STA to the AP or to another non-AP STA.

Example 49 includes the subject matter of any one of Examples 27-78, and optionally, wherein the predefined AID value is 2047.

Example 50 includes the subject matter of any one of Examples 27-49, and optionally, wherein the trigger frame comprises a Single-User (SU) trigger frame.

Example 51 includes the subject matter of any one of Examples 27-50, and optionally, comprising at least one radio to receive the trigger frame and to transmit the non-TB PPDU.

Example 52 includes the subject matter of Example 51, and optionally, comprising one or more antennas connected to the radio, and a processor to execute instructions of an operating system.

Example 53 comprises a wireless communication device comprising the apparatus of any of Examples 1-52.

Example 54 comprises an apparatus comprising means for executing any of the described operations of any of Examples 1-52.

Example 55 comprises a product comprising one or more tangible computer-readable non-transitory storage media comprising instructions operable to, when executed by at least one processor, enable the at least one processor to cause a wireless communication device to perform any of the described operations of any of Examples 1-52.

Example 56 comprises an apparatus comprising: a memory interface; and processing circuitry configured to: perform any of the described operations of any of Examples 1-52.

Example 57 comprises a method comprising any of the described operations of any of Examples 1-52.

Functions, operations, components and/or features described herein with reference to one or more aspects, may be combined with, or may be utilized in combination with, one or more other functions, operations, components and/or features described herein with reference to one or more other aspects, or vice versa.

While certain features have been illustrated and described herein, many modifications, substitutions, changes, and equivalents may occur to those skilled in the art. It is, therefore, to be understood that the appended claims are intended to cover all such modifications and changes as fall within the true spirit of the disclosure.

## Claims

1. A method to be performed at an Access Point (AP), the method comprising:
setting an Association Identifier (AID) field to a predefined AID value configured to indicate that a non-AP station (STA) having latency-sensitive traffic is to be allowed to transmit a non-Trigger-Based (non-TB) Physical layer (PHY) Protocol Data Unit (PPDU) comprising the latency-sensitive traffic according to a channel contention mechanism during a contention-based time period; and
transmitting a trigger frame to allocate the contention-based time period, the trigger frame comprising the AID field.

2. The method of claim 1 comprising transmitting STA-identification information configured to identify a plurality of allocated non-AP STAs, which are to be allowed to transmit non-TB PPDUs with latency-sensitive traffic according to the channel contention mechanism during the contention-based time period.

3. The method of claim 1 or 2, wherein the trigger frame comprises time-offset information configured to indicate time-offsets between a plurality of contention-based time periods to be allocated by the trigger frame.

4. The method of any one of claims 1-3, wherein the predefined AID value is configured to indicate that one or more first non-AP STAs having latency-sensitive traffic are to be allowed to transmit during the contention-based time period according to a first Enhanced Distributed Channel Access (EDCA) parameter set, and that one or more second non-AP STAs are to be allowed to transmit during the contention-based time period according to a second EDCA parameter set, wherein the first EDCA parameter set is configured to provide prioritized channel access relative to the second EDCA parameter set.

5. The method of any one of claims 1-4 comprising transmitting transmission-configuration information configured to indicate a transmission-configuration of the non-TB PPDU.

6. The method of claim 5, wherein the transmission-configuration information is configured to indicate at least one of a PPDU duration limit, a Transmit Opportunity (TxOP) limit, or a transmission type.

7. The method of any one of claims 1-6 comprising transmitting to the non-AP STA traffic-characterization information configured to define one or more parameters to characterize the latency-sensitive traffic.

8. The method of any one of claims 1-7 comprising transmitting the trigger frame during a Transmit Opportunity (TxOP) of the AP, the trigger frame configured to allocate the contention-based time period during the TxOP.

9. The method of any one of claims 1-7 comprising transmitting the trigger frame during a restricted Target Wake Time (r-TWT) Service Period (SP), wherein the predefined AID value is configured to indicate that non-AP STAs, which are members of the r-TWT SP, are to be allowed to transmit non-TB PPDUs during the contention-based time period.

10. The method of any one of claims 1-8, wherein the trigger frame comprises a Multi-user (MU) Request to Send (RTS) trigger frame.

11. The method of claim 10 comprising setting a predefined Transmit Opportunity (TxOP) sharing mode subfield value in a TxOP sharing mode subfield of the MU RTS trigger frame, wherein the predefined TxOP sharing mode subfield value is configured to indicate that the MU RTS trigger frame is to allocate time for low-latency frame transmissions.

12. The method of claim 10 or 11 comprising setting the AID field comprising the predefined AID value in a user Information (info) field of the MU RTS trigger frame.

13. An apparatus comprising a controller configured to cause an Access Point (AP) to perform the method of any one of claims 1-12.

14. The apparatus of claim 13 comprising at least one radio to transmit the trigger frame,
one or more antennas connected to the radio, and a processor to execute instructions of an operating system.

15. A product comprising one or more tangible computer-readable non-transitory storage media comprising instructions operable to, when executed by at least one processor, enable the at least one processor to cause an Access Point (AP) to perform the method of any one of claims 1-12.
